# EUROPÄISCHE PATENTSCHRIFT

(11) **EP 3 740 981 B1**
(45) Veröffentlichungstag und Bekanntmachung des Hinweises auf die Patenterteilung: **15.04.2026**
(21) Anmeldenummer: 19708766.1
(22) Anmeldetag: 11.01.2019
(51) Int. Cl.: H01M 4/04, H01M 4/66, H01M 4/74, H01M 10/052

(54) **ELEKTRODENFOLIE UND VERFAHREN ZU DEREN HERSTELLUNG**
ELECTRODE SHEET AND METHOD FOR PRODUCING THE SAME
FEUILLE D'ÉLECTRODE ET PROCÉDÉ POUR LA FABRICATION DE CELLE-CI

(30) Priorität: 16.01.2018 DE 102018000272
(43) Veröffentlichungstag der Anmeldung: 25.11.2020
(73) Patentinhaber: elfolion GmbH, 06484 Quedlinburg (DE)
(72) Erfinder: DANZIGER, Manfred, 06485 Quedlinburg (DE)
(74) Vertreter: Fischer, Volker
(86) Internationale Anmeldenummer: PCT/DE2019/000004
(87) Internationale Veröffentlichungsnummer: WO 2019/141303

(56) Entgegenhaltungen:
- WO-A2-02/058172
- DE-B4- 102013 108 808
- JP-A- H10 321 216
- US-A1- 2009 311 587

## Beschreibung

Die Erfindung betrifft eine Elektrodenfolie welche mindestens eine vorbestimmte Funktion erfüllt.

Eine Elektrodenfolie ist als ein folienartiges Funktionsmaterial im Sinne der Erfindung zu verstehen und ist immer ein Verbundmaterial, also ein Material aus drei oder mehr verbundenen Werkstoffen, wobei mindestens einer dieser Werkstoffe ein Konstruktionswerkstoff ist und mindestens zwei der Werkstoffe Funktionswerkstoffe sind. Dabei dienen die Funktionswerkstoffe insbesondere der Erfüllung derjenigen Funktion, die für die zielgerichtete spezielle physikalische, chemische, physikochemische, biologische oder andere technische bzw. technologische Anwendung entscheidend und charakteristisch ist. In seiner Gesamtheit besitzt ein folienartiges Funktionsmaterial andere Eigenschaften als die Werkstoffe, aus denen es besteht. Es lässt sich somit für die Realisierung einer zielgerichteten Funktion anwenden, und zwar anders als sich seine einzelnen Werkstoffe anwenden ließen.

Funktionswerkstoffe sind dabei im Sinne der Werkstoffwissenschaften eine Untergruppe der Werkstoffe. Bei den Werkstoffen wird in der Regel zwischen Konstruktionswerkstoffen und Funktionswerkstoffen unterschieden, wobei sich Funktionswerkstoffe im Unterschied zu Konstruktionswerkstoffen nicht primär durch ihre mechanische Belastbarkeit und die daraus resultierende mechanische Stabilität auszeichnen, sondern durch besondere elektrische, mechanische, magnetische, akustische, optische oder biologisch-chemische Eigenschaften charakterisiert sind, die sich gezielt beeinflussen lassen, um die Eigenschaften eines Bauteils zu verändern. Bei Funktionswerkstoffen stehen die Eigenschaften, der Verwendungs- und Einsatzzweck des Funktionswerkstoffes im Vordergrund, nicht die konstruktive Gestaltung von Bauteilen, gleichwohl können Funktionswerkstoffe auch eine mechanische Belastbarkeit aufweisen.

Die Erfindung betrifft eine Elektrodenfolie zur Verwendung als Elektrode für den Einsatz in elektrischen Energiespeichern, gemäß dem unabhängigen Anspruch 1, und ein Verfahren zur Herstellung dieser Elektrodenfolie, gemäß dem Verfahrensanspruch 7. Unabhängig davon, lassen sich auf der Grundlage der vorliegenden Erfindung auch Funktionsmaterialien verwirklichen, die in den abhängigen Ansprüchen 2-6 und 8-12 beschrieben werden.

Für die Beschreibung der Erfindung wird der Terminus folienartiges Material verwendet. Folienartige Materialien besitzen in der Regel viele übereinstimmende Eigenschaften mit Folien. Daneben weisen sie aber auch einige signifikante Unterschiede im Vergleich zu ihnen auf.

Bekannterweise sind Folien dünne Materialien in Blattform beziehungsweise in Bahnform, häufig aus Kunststoff oder Metall, aber auch aus anderen Werkstoffen bestehend, von sehr geringer Dicke und großer Fläche. Typische Foliendicken liegen im Bereich unter 0,4 Millimeter. Folien werden in der Regel in Endlosbahnen gefertigt, aufgerollt und später häufig in für die jeweilige Anwendung passende Stücke geschnitten. Obwohl sich Folien durch große Flächen auszeichnen, stellen sie einen dreidimensionalen Festkörper dar, der dadurch charakterisiert ist, dass, wenn x und y die Flächenausdehnung und z die Dicke der Folie charakterisieren, Δx und Δy >> Δz sind, wobei Δx die Länge, Δy die Breite und Δz die Dicke der Folie anzeigen. Ein weiteres charakteristisches Merkmal besteht darin, dass die stoffliche Komponente, also der Werkstoff aus dem die Folie besteht, den gesamten dreidimensionalen Festkörper makroskopisch ausnahmslos ausfüllt, das heißt an keiner Stelle innerhalb des Festkörpers befinden sich weder andere Werkstoffe noch makroskopisch freie Räume. Nur der Werkstoff, aus dem die Folie besteht, füllt den dreidimensionalen Raum, den der Folienfestkörper umspannt, aus. Alle anderen Materialien, die quasi wie eine Folie aussehen, sich wie Folien verhalten und sich wie Folien verwenden lassen, die aber die aufgeführten Merkmale nicht in sich vereinigen, sind folienartige Materialien. Leider ist häufig der Fall festzustellen, dass diese Materialien ebenfalls als Folien bezeichnet werden, was jedoch streng genommen nicht richtig ist.

Folienartige Materialien sind genau wie Folien dünne Materialien in Blatt- bzw. Bahnform mit einer großen Ausdehnung in zwei Dimensionen und einer vergleichsweise geringen Ausdehnung in einer dritten Dimension. Auch folienartige Materialien werden in der Regel in Endlosbahnen gefertigt, aufgerollt und später oftmals in passende Stücke geschnitten. Der Unterschied zu Folien besteht darin, dass der Körper eines folienartigen Materials, der ebenfalls durch x, y und z charakterisiert wird, wobei x und y die Flächenausdehnung des Körpers und z die Richtung der querschnittlichen Ausdehnung des folienartigen Materials, wobei die querschnittliche Ausdehnung den messbaren Abstand von einer Seite des Körpers zur gegenüberliegenden Seite des Körpers darstellt, charakterisieren und Δx die Länge, Δy die Breite und Δz die querschnittliche Ausdehnung des folienartigen Materials anzeigen, innerhalb dieser Abmessung zwar zusammenhängend aber nicht raumfüllend von einem Werkstoff durchsetzt ist, das heißt der Werkstoff, aus dem das folienartige Material besteht, füllt den dreidimensionalen Raum, der von diesem Körper aufgespannt wird, nicht vollständig makroskopisch aus. Entsprechend ist dieser Körper durch diskrete oder miteinander verbundene Teilvolumina, auch freie Volumina genannt, durchzogen. Diskrete Teilvolumina, auch als geschlossene Teilvolumina bezeichnet, sind Hohlräume beziehungsweise Hohlvolumen beziehungsweise Höhlungen, die einen freien Raum innerhalb gewisser Grenzen darstellen. Gebildet werden diese Grenzen durch den Werkstoff, aus dem das folienartige Material besteht, die abgrenzende Schicht oder Struktur.

Ein folienartiges Funktionsmaterial ist eine Zusammensetzung aus miteinander verbundenen Werkstoffen. In einem folienartigen Funktionsmaterial sind die von einem Werkstoff, beispielsweise einem als Trägermedium ausgebildeten Konstruktionswerkstoff, umgebenen oder eingegrenzten Teilvolumina von einem oder mehreren anderen Werkstoffen durchsetzt oder sogar vollständig von einem oder mehreren anderen als dem das Teilvolumina begrenzenden Werkstoff, also beispielsweise dem Trägermedium, ausgefüllt.

Aus diesem Grund ist das Spektrum folienartiger Funktionsmaterialien entsprechend groß.

Als Beispiel eines als Trägermedium ausgebildeten Konstruktionswerkstoffs kann expandiertes Polytetrafluorethylen, auch als ePTFE bezeichnet, eine speziell verarbeitete Form des Polytetrafluorethylens, angeführt werden. Es kann als folienartiges Material ausgebildet sein. Während des Verarbeitungsprozesses wird von multidirektionalem ePTFE gesprochen. Das durch diesen Herstellungsprozess entstehende Material ist mit PTFE-Molekülfasern durchsetzt und zeichnet sich durch eine poröse Struktur aus, die bis zu 70 Prozent offene, befüllbare Teilvolumina aufweist.

Auch Werkstoffe in Form flächenförmiger textiler Gebilde, wie zum Beispiel Gewebe, Gewirke, Gestricke, Geflechte, Vliesstoffe und Filze, können als Trägermedien für folienartige Materialien fungieren. Hauptbestandteile aller textilen Erzeugnisse sind Textilfasern, also Fasern, die sich in textilen Fertigungsverfahren verarbeiten lassen, insbesondere verspinnbar sind. Es handelt sich um linienförmige Gebilde, das heißt das Verhältnis Länge zu Durchmesser ist wesentlich größer als 1, mit einer ausreichenden Länge sowie Bieg- und Schmiegsamkeit als Voraussetzung für ihre Verarbeitbarkeit. Der Form nach können die Fasern in Spinnfasern, das bedeutet Fasern begrenzter Länge, und Filamente, das bedeutet Endlosfasern, unterschieden werden.

Eine gesonderte Form textiler Gebilde stellen solche dar, die aus Metalldrähten aufgebaut sind. Ein textiles Gewebe aus Metalldraht wird Metallgewebe oder Drahtgewebe genannt. Metallgewebe werden ebenfalls auf Webmaschinen gefertigt.

Für eine Anwendung in elektrischen Energiespeichern werden Elektrodenfolien als positive oder negative Elektroden beziehungsweise als Anodenfolien oder als Kathodenfolien eingesetzt, welche aktive und nichtaktive Funktionen erfüllen. Im Falle von Elektrodenfolien stellt die Ladungsträgerspeicherung in all seinen Facetten die aktive Funktion dar. Nichtaktive Funktionen sind im Gegensatz dazu die elektrische Leitungsfunktion für die Zu- und Abführung von Ladungsträgern, die Anbindungsfunktion für den die aktive Funktion erfüllenden Funktionswerkstoff. Im Falle der bekannten Elektrodenfolien dient der Funktionswerkstoff oft auch der mechanischen Stabilität der Elektrodenfolie bzw. trägt wesentlich zur mechanischen Stabilität der Elektrodenfolie bei.

Elektrische Energiespeicher basieren beispielsweise auf der spontanen Umwandlung von chemischer in elektrische Energie und sind damit sogenannte galvanische Zellen oder sie basieren auf einer Speicherung von elektrischer Energie in chemischen Verbindungen, wobei die Reaktionspartner, wie zum Beispiel bei Redox-Flow-Batterien, in einem Lösungsmittel in gelöster Form vorliegen. Alternativ können elektrische Energiespeicher auf dem Prinzip beruhen, dass die Energie statisch in einem elektrischen Feld gespeichert wird. Dieses Prinzip kommt insbesondere bei Kondensatoren, zum Beispiel bei Elektrolytkondensatoren, Superkondensatoren, wie Doppelschichtkondensatoren, Pseudokondensatoren oder Hybridkondensatoren, zum Einsatz. Zur Erzielung einer möglichst hohen Kapazität der Energiespeicher bei kleinem Bauvolumen soll die Dicke der Elektrodenfolie möglichst gering sein. Zur Sicherstellung der mechanischen Stabilität der Elektrodenfolien werden dabei Konstruktionswerkstoffe in Form von Trägerfolien oder textilen räumlichen Flächengebilden eingesetzt.

In Elektrodenfolien kommen als Werkstoff oft Metalle in Form von Metallfolien zum Einsatz. Meistens benötigen Metallfolien keinen weiteren Metallüberzug oder eine weitere metallische Beschichtung, weil außer der mechanischen Stabilität auch die elektrische Leitungsfunktion für den Ladungsträgerzu- und -abtransport durch die Metallfolie selbst gewährleistet werden kann. In diesem Kontext umfasst der Begriff Stabilität die Festigkeit des Werkstoffes gegenüber mechanischen und thermischen Einflüssen auf das Material, wie beispielsweise mechanische und thermische Spannung, Biegung, Dehnung, Torsion, Knicken, Formänderungen usw.

Die z-Ausdehnung dieser Metallfolien, also die Metallfoliendicke, richtet sich dabei nach der Bedingung, dass der erforderlichen mechanischen Stabilität entsprochen werden kann und die Weiterverarbeitbarkeit der Metallfolie gewährleistet ist. Derartige Metallfolien können zur Sicherstellung der erforderlichen mechanischen Stabilität nicht beliebig dünn gefertigt werden. Zur Sicherstellung der elektrischen Leitungsfunktion wären hingegen erheblich dünnere Metallfolien ausreichend.

Die mechanische Stabilität der Folie muss den Herstellungsprozess der Elektrodenfolien überhaupt ermöglichen. Die Elektrodenfolie muss außerdem die Funktionalität der gesamten Folienkomponente der Baugruppe sicherstellen. Dazu sind ausreichend gut haftende Verbunde mit den aufzubringenden Schichten und Bestandteilen notwendig.

Bekannt sind auch Elektrodenfolien mit einem als Folie ausgebildeten dielektrischem Werkstoff, zum Beispiel eine Polymerfolie, der eine ein- oder beidseitige Metallisierung aufweist. Dabei muss die Metallisierung so ausgebildet und bemessen sein, dass der Ladungsträgerzu- und -abtransport sichergestellt ist. Dazu gehört eine ausreichende elektrische Leitfähigkeit, die auch spontan auftretenden Stromdichten genügt. Da die Dicke dieser Metallschichten meistens oberhalb von einem oder zwei Mikrometern liegt und die Metallbeschichtung chemisch, elektrochemisch beziehungsweise vakuumtechnisch erfolgt, ist die Herstellung dieses Verbundes im Vergleich zur Anfertigung reiner Metallfolien entsprechend kostenintensiv. Nachteilig bei einer beidseitigen Metallisierung ist außerdem, dass sich zwischen zwei voneinander unabhängigen Metallschichten ein Dielektrikum befindet. Um diese Metallschichten miteinander zu verbinden, also kurzzuschließen, sind zusätzliche Verfahrensschritte erforderlich.

Zur Herstellung von Elektrolytkondensatoren werden beispielsweise möglichst dünne elektrisch leitfähige Aluminiumfolien verwendet. Elektrisch leitfähige Folien aus hochreinem Aluminium mit einer Foliendicke unterhalb 100 µm lassen sich aufgrund ihrer unzureichenden mechanischen Stabilität nur schwer in konventionellen, also dem Stand der Technik entsprechenden, Bearbeitungsprozessen, zum Beispiel zur Herstellung von Anodenfolien für Elektrolytkondensatoren, verarbeiten.

In Lithium-Ionen-Akkumulatoren liegt die Dicke konventioneller Folien aus Aluminium für den positiven Stromableiter, die auch die mechanische Stabilität der Elektrode sicherstellen muss, zwischen 25 µm und 15 µm. Angestrebt wird hier, Folien mit einer Foliendicke von zirka 10 µm einzusetzen. Die Dicke konventioneller Folien dieser Ackumulatoren für den negativen Stromableiter aus Kupfer, die auch die mechanische Stabilität der Elektrode sicherstellen muss, liegt zwischen 15 µm und 10 µm. Ziel ist der Einsatz von Folien mit einer Foliendicke von zirka 6 µm. Ein großes Problem stellt dabei die unzureichende mechanische Stabilität der Folien dar, insbesondere während des Elektrodenfolien-Herstellungsprozesses. Einer Verringerung der Dicke der Folien sind aus diesem Grund Grenzen gesetzt.

In der DE 10 2010 011 413 A1 ist eine kathodische Elektrode offenbart, welche einen Träger aufweist, der ein metallisches Material, insbesondere Aluminium, umfasst und eine Stärke von 15 bis 45 µm hat. In der EP 1 455 404 A2 wird eine Elektrodeneinheit mit einer porösen Tragstruktur beschrieben, welche aus Metalldraht aufgebaut ist.

Zur Verbesserung der mechanischen Stabilität einer Metallfolie ist aus der DE 10 2012 000 508 A1 ein Verfahren zur Herstellung eines sogenannten GLARE-Bauteiles bekannt, bei dem abwechselnd Bahnen aus Aluminium und Prepreg-Bahnen aufeinander gelegt und nachfolgend verklebt beziehungsweise verpresst werden. Dabei erfolgt die Schichtung so, dass jeweils außenliegend Aluminiumbahnen angeordnet sind. Unter Prepreg-Bahnen werden vorgehärtete Bahnen aus glasfaserverstärktem Epoxidharz verstanden. Für Anwendungen, die eine elektrisch gut leitfähige Folie erfordern, sind nach diesem Verfahren hergestellte, mechanisch stabilisierte Metallfolien allerdings nicht geeignet.

Mit Metall beschichtete Gewebe werden auch für eine Verwendung in Kleidungsstücken genutzt. Entscheidend ist dabei insbesondere die Eigenschaften einer Atmungsaktivität des Gewebes zu erhalten. In der DE 101 96 402 T1 ist ein mit Gold kaschiertes Gewebe und ein Verfahren zu seiner Herstellung beschrieben. Aufgrund der Öffnungen zwischen den mit Metall beschichteten Trägerelementen wird eine Atmungsaktivität gewährleistet.

Aus der DE 10 2013 108 808 B4 ist ein Verfahren zur Herstellung eines Kohlenstoff-Metall-Verbundstoffes und ein Verfahren zur Herstellung einer Halbleiterelementanordnung bekannt. Ein Kohlenstofffasergewebe, welches bänderförmige Trägerelemente aufweist, wird dabei mit einem Metall beschichtet, sodass es nachfolgend für eine Wärmeabfuhr an Halbleiterbauelementen verwendbar ist. Zur Fixierung an den Halbleiterbauelementen wird in Zwischenräume des mit Metall beschichteten Kohlenstofffasergewebes ein Lötmetall eingebracht, welches das beschichtete Kohlenstofffasergewebe konstruktiv mit dem Halbleiterbauelement verbindet. Die erste auf dem Kohlenstofffasergewebe aufgebrachte Metallschicht dient somit in erster Linie der Wärmeableitung von dem Bauelement und das nachfolgend eingebrachte Lötmetall erfüllt hauptsächlich die Funktion der konstruktiven Fixierung an dem zu kühlenden Bauelement. Dabei füllen die bänderförmigen Trägerelemente einen großen Teil des Gesamtvolumens aus, um eine effektive Wärmeableitung zu gewährleisten. Das Lötmetall hingegen nimmt nur einen geringen Anteil am Gesamtvolumen ein, welcher für die Befestigung des Kühlkörpers am Halbleiterbauelement ausreichend ist. Daraus resultiert die Tatsache, dass das Volumen des Kohlenstofffasergewebes einen Großteil des Gesamtvolumens des Kühlkörpers ausmacht.

Weiterer Stand der Technik wird in US 2009/311587 A1 und JPH10 321216 A offenbart.

Die Aufgabe der Erfindung besteht darin, eine Elektrodenfolie zur Verfügung zu stellen, die ein aus einem Konstruktionswerkstoff ausgebildetes Trägermedium im Sinne eines tragenden Grundkörpers sowie mindestens zwei mit dem Trägermedium verbundene Funktionswerkstoffe aufweist. Dabei soll das aus dem Konstruktionswerkstoff ausgebildete Trägermedium bei für die Verwendung des folienartigen Funktionsmaterials ausreichender mechanischer Stabilität in Bezug auf das Volumen des gesamten folienartigen Funktionsmaterials nur ein geringes Volumen einnehmen.

Die Aufgabe wird durch einen Gegenstand und ein Verfahren mit den Merkmalen gemäß der unabhängigen Patentansprüche 1 und 7 gelöst. Weiterbildungen sind in den abhängigen Patentansprüchen angegeben.

Die Aufgabe wird durch eine Elektrodenfolie gelöst, welche mindestens eine vorbestimmte Funktion erfüllt und als Träger in den elektrischen Energiespeichern anwendbar ist. In dem folienartigen Funktionsmaterial ist ein aus mindestens einem Konstruktionswerkstoff ausgebildetes folienartiges, ein Trägergesamtvolumen umfassendes Trägermedium mit einer querschnittlichen Ausdehnung ≤ 100 µm angeordnet, das als eine Matrix anzusehen ist, das heißt ein Grundkörper, in den weitere Werkstoffe eingebettet sind. Das Trägermedium formiert sich aus linienförmig und knotenförmig ausgebildeten Trägerelementen, im Weiteren kurz linienförmige und knotenförmige Trägerelemente genannt, die die Werkstoffkomponenten des Trägermediums bilden und das Trägergesamtvolumen durchsetzen, zu einer bänderförmigen Ausdehnung mit darin befindlichen, miteinander verbundenen Teilvolumina des Trägergesamtvolumens, welche durch in Nachbarschaft befindliche Trägerelemente aufgespannt werden. Dabei sind die linienförmigen und knotenförmigen Trägerelemente mit einem ersten Funktionswerkstoff, welcher eine erste Funktion erfüllt, umhüllend beschichtet und das durch die miteinander verbundenen Teilvolumina ausgebildete, verbleibende Volumen des Trägergesamtvolumens mit mindestens einem zweiten Funktionswerkstoff, welcher eine zweite, sich von der ersten Funktion unterscheidende, Funktion erfüllt, ausgefüllt.

Wird das durch die miteinander verbundenen Teilvolumina ausgebildete, verbleibende Volumen des Trägergesamtvolumens mit mehr als einem zweiten Funktionswerkstoff ausgefüllt, erfüllt jeder zweite Funktionswerkstoff mindestens eine Funktion, die sich von der ersten Funktion unterscheidet.

Es gehört mit zur Erfindung, dass durch den zweiten oder weitere in die Teilvolumina eingebrachte Funktionswerkstoffe weitere Funktionen erfüllbar sind. Es soll ferner im Weiteren immer verstanden werden, dass der zweite oder ein weiterer in die Teilvolumina eingebrachte Funktionswerkstoff nicht zwingend nur eine Funktion erfüllt, sondern mehrere Funktionen erfüllen kann. Dabei unterscheidet sich wenigstens eine aktive oder nichtaktive Funktion eines in die Teilvolumina eingebrachten Funktionswerkstoffes von einer aktiven oder nichtaktiven Funktion des die Trägerelemente umhüllenden ersten Funktionswerkstoffes.

Das Trägermedium besteht aus einer Mehrzahl von einzelnen Trägerelementen, welche linienförmig, also groß in einer Dimension und dagegen klein in den beiden anderen Dimensionen, und sind knotenförmig ausgebildet. Linienförmige Trägerelemente sind im Sinne der Erfindung Trägerelemente, deren Ausdehnung in den beiden Dimensionen, in denen das linienförmige Trägerelement klein ausgebildet ist, annähernd gleich ist. Das Verhältnis der großen Dimension zu den beiden kleineren Dimensionen ist dabei wenigstens 50 : 1. Das Verhältnis der Ausdehnungen der beiden kleineren Dimensionen zueinander ist dabei nicht kleiner als 1 : 5 und nicht größer als 5 : 1. Linienförmige Trägerelemente unterscheiden sich somit von bänderförmigen Trägerelementen. Für den Fall wenigstens abschnittsweise großer Abstände zwischen den linienförmigen Trägerelementen können die dargestellten Begrenzungen der linienförmigen Trägerelemente auch überschritten werden.

Die linienförmigen Trägerelemente weisen wenigstens abschnittsweise große Abstände zueinander auf, so dass ihre flächenhafte Wirkung bezogen auf die geometrische Ebene, in der die Flächen der linienförmigen Trägerelemente liegen, vernachlässigbar ist und dadurch keine nahezu vollständige Abgrenzung der aufgespannten Teilvolumina voneinander durch die linienförmigen Trägerelemente bewirkt wird. Dabei wird unter großen Abständen verstanden, dass der Abstand zwischen den einzelnen linienförmigen Trägerelementen im Verhältnis zur größeren der beiden kleineren Dimensionen der linienförmigen Trägerelemente größer ist als 5 : 1. In diesem Falle kann das Verhältnis der beiden kleineren Dimensionen die gemachten Einschränkungen überschreiten.

Knotenförmig ist ein Trägerelement im Sinne der Erfindung ausgebildet, wenn es in allen Dimensionen eine ähnliche Ausdehnung hat, insbesondere ist die Ausdehnung in allen Dimensionen klein gegenüber der großen Dimension der linienförmigen Trägerelemente. Bei einem Berühren von zwei oder mehr linienförmigen Trägerelementen weist das Trägermedium an den Berührungspunkten knotenförmige Trägerelemente auf.

Das Trägergesamtvolumen beschreibt im Sinne der Erfindung ein Volumen, welches alle Trägerelemente und somit das gesamte Trägermedium einschließt.

Ein Körper weist im Sinne der Erfindung eine bänderförmige Ausdehnung auf, wenn seine Ausdehnung in einer Dimension im Vergleich zur Ausdehnung in den beiden anderen Dimensionen klein ist.

Die Trägerelemente sind mit einem ersten Funktionswerkstoff umhüllend beschichtet. An den Berührungspunkten der Trägerelemente kann die umhüllende Beschichtung Fehlstellen aufweisen, jedoch unter der Bedingung, dass alle Bereiche der Beschichtung miteinander in Verbindung stehen und eine zusammenhängende Schicht ausbilden.

Die Trägerelemente, welche das Trägergesamtvolumen durchsetzen, sind in Abschnitten derart voneinander beabstandet angeordnet, dass zwischen benachbarten Trägerelementen Teilvolumina aufgespannt sind. Die aufgespannten Teilvolumina sind als offene, miteinander verbundene Freiräume ausgebildet. Diese Teilvolumina sind gerade nicht mit Trägerelementen ausgefüllt und bilden somit einen Zwischenraum zwischen den mit einem ersten Funktionswerkstoff umhüllend beschichteten Trägerelementen, welcher befüllbar ist. Erfindungsgemäß sind diese Teilvolumina, also diese Zwischenräume, mit mindestens einem zweiten Funktionswerkstoff vollständig aber nicht kompakt ausgefüllt.

Im Weiteren soll unter erstem Funktionswerkstoff immer der Funktionswerkstoff verstanden werden, mit dem die linienförmigen und knotenförmigen Trägerelemente umhüllend beschichtet sind, und unter zweitem Funktionswerkstoff derjenige Funktionswerkstoff, der in die von den Trägerelementen aufgespannten offenen, miteinander verbundenen freien Teilvolumina eingebracht ist, d.h. diese ausfüllt. Dabei füllt der zweite Funktionswerkstoff die von den Trägerelementen aufgespannten offenen, miteinander verbundenen freien Teilvolumina zwar vollständig, aber nicht kompakt aus, was bedeutet, dass sich innerhalb des zweiten Funktionswerkstoffs sowohl kleinere freie Volumina, beispielsweise in Porenform, die offen und untereinander verbunden sein können, als auch zusätzlich andere zweite Funktionswerkstoffe befinden können.

Nach der Konzeption der Erfindung sind die Trägerelemente mit einem ersten Funktionswerkstoff umhüllt, welcher mindestens eine erste aktive oder nichtaktive Funktion erfüllt. Dabei bleibt die Matrixform des beschichteten folienartigen Trägermediums erhalten. Das bedeutet, dass auch der größte Teil des vorhandenen Hohlraumes, also die freien, miteinander verbundenen Teilvolumina im Trägermedium, erhalten bleibt, sich jedoch um das Volumen des die Trägerelemente umhüllenden ersten Funktionswerkstoffes verringert. Insbesondere ist innerhalb des Trägermediums das Gesamtvolumen der freien Teilvolumina nicht kleiner als das Gesamtvolumen der mit dem ersten Funktionswerkstoff umhüllten Trägerelemente. Bevorzugt ist das Verhältnis des Gesamtvolumens der freien Teilvolumina zum Gesamtvolumen der mit dem ersten Funktionswerkstoff umhüllten Trägerelemente wenigstens 2 : 1 oder wenigstens 5 : 1, besonders bevorzugt wenigstens 10 : 1.

In einer vorteilhaften Ausgestaltung ist bei einer parallelen Anordnung der linienförmigen Trägerelemente das Verhältnis der Ausdehnung der linienförmigen Trägerelemente in den Dimensionen der geringeren Ausdehnung zu dem Abstand der linienförmigen Trägerelemente im Trägermedium wenigstens 1 : 1. Das Verhältnis ist bevorzugt wenigstens 1 : 2 oder wenigstens 1 : 3 oder wenigstens 1 : 5.

In die vorhandenen Teilvolumina des folienartigen Funktionsmaterials können vorteilhaft ein oder mehrere zweite Funktionswerkstoffe eingebracht sein, die aktive Funktionen, aber auch nichtaktive Funktionen erfüllen, und es können die Ober- und die Unterseite des folienartigen Funktionsmaterials haftfest mit einem zweiten Funktionswerkstoff beschichtet sein. Dabei erfüllt wenigstens ein zweiter Funktionswerkstoff wenigstens eine aktive oder nichtaktive Funktion, die sich von einer aktiven oder nichtaktiven Funktion, die der erste Funktionswerkstoff erfüllt, unterscheidet.

Insbesondere bei der Anwendung des folienartigen Funktionsmaterials als Elektrode für elektrische Energiespeicher befinden sich innerhalb des zweiten Funktionswerkstoffes oder der zweiten Funktionswerkstoffe offene porenförmige miteinander verbundene Hohlräume.

Ein folienartiges Funktionsmaterial ist also ein Verbundwerkstoff, dessen Bestandteile oder Werkstoffe neben der eigentlichen speziellen für die Anwendung des Funktionsmaterials charakteristischen Funktion ein oder mehrere weitere Funktionen ausführen, um so die vorgesehene Anwendung, wie beispielsweise elektrische Energie zu speichern oder Katalyseprozesse oder als Heizmittel zu dienen, zu ermöglichen.

Aus diesem Grund ist es zumeist erforderlich, dass von den Funktionswerkstoffen aktive und nichtaktive Funktionen erfüllt werden.

Unter aktiver Funktion ist dabei zu verstehen, dass ein Funktionswerkstoff diejenige Funktion erfüllt, die dem Zweck beziehungsweise der Bestimmung für die Anwendung des folienartigen Funktionsmaterials entspricht, also für die Anwendung des folienartigen Funktionsmaterials charakteristisch ist.

Unter nichtaktiver Funktion ist zu verstehen, dass ein Funktionsmaterial diejenige Funktion erfüllt, die notwendig ist, um die dem Zweck beziehungsweise der Bestimmung für die Anwendung des folienartigen Funktionsmaterials aktiven Funktionen zu ermöglichen. Aus diesem Grund sind sowohl aktive als auch nichtaktive Funktionen exorbitant wichtig. Dabei kann ein Funktionswerkstoff ein oder mehrere Funktionen erfüllen, die aktive oder nichtaktive sein können.

In diesem Kontext erfüllt auch das Trägermedium bzw. der das Trägermedium ausbildende Konstruktionswerkstoff eine nichtaktive Funktion, nämlich die mechanische Stabilität des folienartigen Funktionsmaterials.

Es kann für die Anwendung des folienartigen Funktionsmaterials vorteilhaft sein, dass mindestens ein zweiter Funktionswerkstoff die Oberseite und/oder die Unterseite des folienartigen Funktionsmaterials haftfest bedeckt.

Vorteilhaft ist eine Ausbildung des folienartigen Funktionsmaterials, bei der die linienförmigen Trägerelemente des Trägermediums ein Gewebe bilden, dessen senkrecht zueinander verlaufende Kett- und Schussfäden miteinander verflochten sind. Die Kett- und Schussfäden bestehen in einer bevorzugten Variante aus mehreren Filamenten. Alternativ können die Kett- und Schussfäden als Monofilament ausgebildet sein.

Bei einer Ausbildung des folienartigen Funktionsmaterials ist der erste Funktionswerkstoff, also der Funktionswerkstoff, mit dem die Trägerelemente umhüllend beschichtet sind, ein Metall.

Bei einer bevorzugten Ausbildung des folienartigen Funktionsmaterials ist das Trägermedium ein Glasfasergewebeband oder ein Kohlefasergewebeband oder ein Mineralwollefasergewebeband oder ein Polymerfasergewebeband oder ein Drahtgewebeband.

Bei einer bevorzugten Ausbildung des folienartigen Funktionsmaterials enthält der zweite Funktionswerkstoff eines der Stoffgemische aus der Gruppe Lithium/Nickeloxid, Lithium/Manganoxid, Lithium/Kobaltoxid und Lithium/Eisenphosphat sowie gegebenenfalls weitere Additive, vorzugsweise Ruß.

Die Aufgabe wird auch durch ein Verfahren zur Herstellung eines folienartigen Funktionsmaterials gelöst. Dieses Verfahren umfasst folgende Schritte:
> Umhüllung von Trägerelementen eines Trägermediums durch Aufbringen eines ersten Funktionswerkstoffs, welcher eine erste Funktion erfüllt, auf die Trägerelemente und
> Ausfüllen des durch die miteinander verbundenen Teilvolumina ausgebildeten verbleibenden Volumens des Trägergesamtvolumens mit mindestens einem zweiten Funktionswerkstoff, welcher eine zweite sich von der ersten Funktion unterscheidende Funktion erfüllt.

Dabei kann die Umhüllung der Trägerelemente durch eine Metallisierung der Trägerelemente erfolgen.

Bevorzugt erfolgt die Metallisierung der Trägerelemente des Trägermediums durch eine physikalische Gasphasenabscheidung von Metall in einer Vakuumbeschichtungsanlage. Die physikalische Gasphasenabscheidung von Metall in einer Vakuumbeschichtungsanlage erfolgt dabei vorzugsweise durch thermische Bedampfung oder durch Elektronenstrahlverdampfung oder durch Laserstrahlverdampfung oder durch Lichtbogenbedampfung oder durch Kathodenzerstäubung oder durch ionenstrahlunterstütze Abscheideverfahren.

Thermische Bedampfung ist im Sinne der Erfindung ein Prozess, bei dem ein Material mittels eines Eintrags von thermischer Energie verdampft beziehungsweise zerstäubt wird und sich daraufhin an die Trägerelemente des Trägermediums anlagert. Vorteilhaft ist die Anwendung mehrerer verschiedener, d.h. von mehr als zwei, Aufdampfwinkel während des thermischen Bedampfungsprozesses, um die Trägerelemente möglichst vollständig, d.h. allseitig mit dem ersten Material, zu umhüllen.

Jegliche andere hier genannte Verfahren zur Abscheidung verlaufen adäquat, wobei sie sich im Wesentlichen durch die Art des Energieeintrags in das erste Material unterscheiden.

In einer vorteilhaften Variante des Verfahrens erfolgt die Umhüllung der Trägerelemente mit dem ersten Funktionswerkstoff durch thermisches Spritzen. Bevorzugt erfolgt dieses thermische Spritzen durch Drahtflammspritzen oder durch Pulverflammspritzen oder durch Hochgeschwindigkeitsflammspritzen oder durch Hochgeschwindigkeitsdrahtflammspritzen oder durch Lichtbogendrahtspritzen oder durch Plasmaspritzen oder durch Kaltgasspritzen oder durch Schmelzbadspritzen.

Auch bei der Anwendung des thermischen Spritzens werden die Trägerelemente des Trägermediums allseitig unter mehreren verschiedenen, d.h. von mehr als zwei, Spritzwinkeln mit dem ersten Material vollständig umhüllt.

Alternativ zum thermischen Bedampfen beziehungsweise zum thermischen Spritzen unter mehreren verschiedenen, d.h. mehr als zwei, Aufdampfwinkeln beziehungsweise Spritzwinkeln kann ein thermisches Bedampfen beziehungsweise ein thermisches Spritzen zur Umhüllung der Trägerelemente mit dem ersten Funktionswerkstoff durch ein thermisches Bedampfen beziehungsweise ein thermisches Spritzen unter einem oder zwei, bevorzugt um 180° versetzten, Aufdampf- bzw. Spritzwinkeln, verbunden mit einer nachfolgenden Wärmebehandlung, erfolgen. Bei dieser Wärmebehandlung wird dem ersten Funktionswerkstoff, welcher durch thermische Bedampfung bzw. durch thermisches Spritzen auf Trägerelemente des Trägermediums aufgebracht worden ist, in einem definierten kurzen Zeitraum oder in definierten Zeitintervallen Wärme zugeführt, derart, dass die Formänderungsfähigkeit des aufgebrachten ersten Funktionswerkstoffes zunimmt, bis er beginnt zu fließen und die Trägerelemente zu umhüllen. Der Wärmeeintrag muss dabei in einem solchen Zeitintervall erfolgen, dass der erste Funktionswerkstoff das Trägerelement umhüllt, jedoch nicht davon abtropft. Diese Methode lässt sich für eine querschnittliche Ausdehnung des auf die Trägerelemente aufgebrachten ersten Materials von bis zu 10 µm anwenden.

Bevorzugt erfolgt der Wärmeeintrag impulsartig mit einer Impulsdauer im Bereich von 1 ms bis 100 s, wobei die Temperatur der Wärmequelle bis zu 500 K oberhalb der Schmelztemperatur des aufgebrachten ersten Funktionswerkstoffes liegt. Die Wirkung des Wärmeeintrages kann deshalb als eine Schock-Erwärmung betrachtet werden.

Ist der erste Funktionswerkstoff ein elektrisch leitfähiger Werkstoff und beträgt die Dicke der auf die Trägerelemente aufgebrachten Funktionswerkstoffschicht weniger als einen Mikrometer, kann der Wärmeeintrag mittels Mikrowellen erfolgen. Dabei wird der auf die Trägerelemente aufgebrachte, elektrisch leitfähige erste Funktionswerkstoff einer Mikrowellenstrahlung ausgesetzt, wobei die Mikrowellenenergie so bemessen ist, dass die resultierende Erwärmung die Formänderungsfähigkeit des ersten Funktionswerkstoffes, wie bereits beschrieben, so verändert, dass eine Umhüllung der Trägerelemente mit dem ersten Funktionswerkstoff erfolgt.

Für eine bis etwa 1 µm dicke Schicht des aufgebrachten ersten Funktionswerkstoffes lässt sich für die Bestrahlung mit einem 2,45 GHz-Magnetron angeben, dass die Bestrahlungsleistung im Bereich zwischen 1 Ws/cm² bis 10000 Ws/cm² bei einer Expositionszeit zwischen 0,1 s bis 150 s liegt. Zur Optimierung des Wärmeeintrages kann die Mikrowellenbestrahlungsleistung auch mittels Impulsfolgen zugeführt werden. Die Impulsbreiten liegen dabei im Bereich von 0,01 s bis zu mehreren Sekunden.

Ist der erste Funktionswerkstoff ein Metall, kann eine Metallisierung der Trägerelemente des Trägermediums durch chemische Metallbeschichtung in einem zweistufigen Verfahren erfolgen, bei dem die Metallisierung der Trägerelemente des Trägermediums folgende Schritte umfasst:
➢ Bekeimungsprozess und
> Metallbeschichtungsprozess.

Alternativ kann die Metallisierung der Trägerelemente des Trägermediums durch elektrochemische Metallschichtverstärkung in einem dreistufigen Verfahren erfolgen, wobei die Metallisierung der Trägerelemente des Trägermediums folgende Schritte umfasst:
➢ Bekeimungsprozess,
➢ Metallbeschichtungsprozess und
➢ Metallschichtverstärkungsprozess.

In einer weiteren möglichen Variante erfolgt die Metallisierung der Trägerelemente des Trägermediums durch Schmelztauchen des Trägermediums in einem schmelzflüssigen Metallbad.

Die Anwendung des erfindungsgemäßen folienartigen Funktionsmaterials liegt in der Ausbildung einer Elektrodenfolie für eine Anwendung in elektrischen Energiespeichern. Eigentlich dürfte der Begriff Elektrodenfolie in dem vorliegenden Zusammenhang so nicht verwendet werden, weil es sich im Kontext der Erfindung um ein folienartiges Elektrodenmaterial handelt. Da der Begriff Elektrodenfolie jedoch in der Praxis sowohl für Folien als auch für folienartige Materialien üblich ist, soll er auch an dieser Stelle benutzt werden, immer jedoch unter dem Vorbehalt, dass es sich bei der erfindungsgemäßen Anwendung konkret um ein folienartiges Elektrodenmaterial handelt.

Die Elektrodenfolie besteht konzeptionsgemäß aus einem folienartigen Funktionsmaterial mit einem als Matrix anzusehenden Trägermedium, dessen Trägerelemente mit einem ersten elektrisch leitfähigen Funktionswerkstoff, bevorzugt einem Metall, wie zum Beispiel Aluminium, Kupfer, Silber, Gold, Messing oder anderen Metallen beziehungsweise metallischen Legierungen, umhüllend beschichtet sind. In Sonderfällen können auch andere elektrisch leitfähige Funktionswerkstoffe, wie beispielsweise leitfähige Polymere, zur Ausbildung der die Trägerelemente umhüllenden elektrisch leitfähigen Schicht verwendet werden. Diese elektrisch leitfähige Funktionswerkstoffschicht, mit der die Trägerelemente des Trägermediums umhüllend beschichtet sind, hat die Funktion eines Ladungsträgertransports, also dem Transport von Ladungsträgern in die Elektrodenfolie hinein beziehungsweise aus ihr heraus, welche eine nichtaktive, aber dennoch wichtige Funktion für eine Elektrodenfolie ist. Da quasi alle Trägerelemente des Trägermediums miteinander in Verbindung stehen, ist ein Ladungsträgerzu- und -abfluss in x-, y- und z-Richtung, und somit auch ein Stromfluss zu Kontaktierungen der Elektrodenfolie, möglich. Das in dieser Form metallisierte Trägermedium, welches als metallisierte Matrix angesehen werden kann, weist dabei eine Dicke auf, welche ≤ 100 µm ist. Als Trägermedium werden insbesondere textile dreidimensionale Flächengebilde mit einer querschnittlichen Ausdehnung ≤ 100 µm vorgeschlagen. Zur Ausbildung der Elektrodenfolie ist es weiterhin erforderlich, in die vorhandenen, durch die metallisierten Trägerelemente aufgespannten Teilvolumina im Trägermedium einen zweiten Funktionswerkstoff einzubringen, welcher mindestens eine zweite Funktion erfüllt. Die zweite Funktion, welche der zweite Funktionswerkstoff erfüllt, ist die Energie- bzw. Ladungsträgerspeicherung, also eine aktive Funktion, welche für eine in einem elektrischen Energiespeicher anzuwendende Elektrodenfolie charakteristisch ist. Es ist auch möglich, dass der zweite in die Teilvolumina eingebrachte Funktionswerkstoff weitere als die vorgenannte charakteristische Funktion erfüllt. Dies kann eine nichtaktive Funktion, wie beispielsweise eine elektrische Leitungsfunktion, sein. Der zweite Funktionswerkstoff kann auch zur mechanischen Stabilität der Elektrodenfolie beitragen. Vorteilhaft können die Ober- und die Unterseite der Elektrodenfolie haftfest mit dem zweiten Funktionswerkstoff beschichtet sein.

Mit der Erfindung wird ein folienartiges Funktionsmaterial bereitgestellt, bei dem das Verhältnis des Funktionswerkstoffes, der die für die Anwendung als Elektrodenfolie in einem elektrischen Energiespeicher charakteristische aktive Funktion erfüllt, zu den übrigen im folienartigen Funktionsmaterial enthaltenen Werkstoffen, also dem Konstruktionswerkstoff und dem ersten Funktionswerkstoff, groß ist.

Ein Trägermedium aus einem in Form eines textilen Flächenelementes mit einer dreidimensionalen Ausdehnung ausgebildeten Konstruktionswerkstoffs kann im Sinne der Erfindung als eine Matrix angesehen werden, welche aus textilen Werkstoffen, insbesondere in Form von Garnen oder Fäden, aber auch aus Metall in Form von metallischen Fäden, die als Drähte bezeichnet werden, besteht. Als textile Werkstoffe werden all jene Werkstoffe bezeichnet, die nach irgendeiner Textiltechnologie hergestellt oder verarbeitet werden. Die Garne oder Fäden wiederum bestehen aus einzelnen länglichen Filamenten, den Monofilamenten. Als Material der Garne oder Fäden können neben Naturfasern zum Beispiel auch Glasfasern, Kohlefasern, Mineralwollefasern, Polymerfasern oder Drähte verwendet werden. Drähte stellen an sich ein Monofilament dar. Filamente bezeichnen im Sinne der Erfindung auch Fasern oder Drähte. Garne, Fäden und Drähte können dann zu einem textilen Band, insbesondere zu einem Gewebeband, bei dem einzelne Kettfäden und Schussfäden miteinander verwoben sind, verarbeitet sein. So können derartige Trägermedien zum Beispiel Gewebe, Gestricke oder Gewirke sein.

Für die erfindungsgemäße Anwendung eines Gewebes, Gestrickes oder Gewirkes sollte die Fadendichte so gering wie möglich sein, gerade eben so gering, wie es die technologischen Verarbeitungsanforderungen bezüglich der Träger- und Stabilitätsfunktion noch erlauben.

Die Umhüllung der Trägerelemente des Trägermediums mit dem ersten Funktionswerkstoff kann zu einer erhöhten mechanischen Stabilität des Trägermediums führen, was die Durchführung von Folgebearbeitungsschritten begünstigen kann.

Vorteilhaft kann die Bearbeitung des Trägermediums in einem Rolle-zu-Rolle-Verfahren erfolgen.

Folienartige Funktionsmaterialien können auch für andere Anwendungen ausgebildet sein, wobei sie dann Verbunde jeweils anderer für die entsprechende Anwendung geeigneter Werkstoffe sind. Sie können zum Beispiel für eine Anwendung in Katalysatoren oder in beheizbaren Kunststoffmatten mit einem Mikrobelüftungssystem ausgebildet sein, um nur zwei weitere Beispiele anzuführen.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- **Fig. 1:**: eine prinzipielle schematische Darstellung eines folienartigen Funktionsmaterials im Querschnitt,
- **Fig. 2A:**: eine schematische Darstellung einer Matrix in einer einfachsten Aufbauform,
- **Fig. 2B:**: eine schematische Darstellung einer Matrix in einer ungeordneteren Aufbauform als in Fig. 2A dargestellt,
- **Fig. 2C:**: Rasterelektronenmikroskopaufnahme einer expandierten Polytetrafluorethylenfolie - ePTFE - als eine Ausführung einer Matrix als Trägermedium eines folienartigen Funktionsmaterials,
- **Fig. 2D:**: eine schematische Darstellung eines einlagigen Gewebes als eine Ausführung eines Trägermediums eines folienartigen Funktionsmaterials,
- **Fig. 2E:**: eine schematische Darstellung eines einlagigen Gewirkes als eine Ausführung eines Trägermediums eines folienartigen Funktionsmaterials,
- **Fig. 2F:**: eine Rasterelektronenmikroskopaufnahme eines textilen Geflechts als eine Ausführung eines Trägermediums eines folienartigen Funktionsmaterials,
- **Fig. 3A:**: eine prinzipielle schematische Darstellung eines folienartigen Funktionsmaterials mit einem Glasgewebe im Querschnitt,
- **Fig. 3B:**: eine prinzipielle schematische Darstellung einer Elektrodenfolie nach dem Stand der Technik im Querschnitt,
- **Fig. 3C:**: eine detailliertere schematische Darstellung eines folienartigen Funktionsmaterials im Querschnitt,
- **Fig. 4A:**: eine schematische Darstellung einer Anodenfolie eines Aluminium-Elektrolytkondensators mit einem Glasgewebe als Trägermedium im Querschnitt,
- **Fig. 4B:**: eine Rasterelektronenmikroskopaufnahme einer Anodenfolie eines Aluminium-Elektrolytkondensators als Vertreter einer Funktionsfolie nach dem Stand der Technik im Querschnitt,
- **Fig. 5A:**: eine Rasterelektronenmikroskopaufnahme einer konventionellen Elektrode für Lithium-Ionen-Akkumulatoren nach dem Stand der Technik im Querschnitt,
- **Fig. 5B:**: eine schematische Darstellung einer folienartigen Elektrode für Lithium-Ionen-Akkumulatoren mit einem textilen Trägermedium, dessen Trägerelemente umhüllend mit Aluminium beschichtet sind, im Querschnitt,
- **Fig. 6**: eine schematische Darstellung einer folienartigen Graphitelektrode für Lithium-Ionen-Akkumulatoren mit einem verkupferten Stahldrahtgewebe als Trägermedium im Querschnitt,

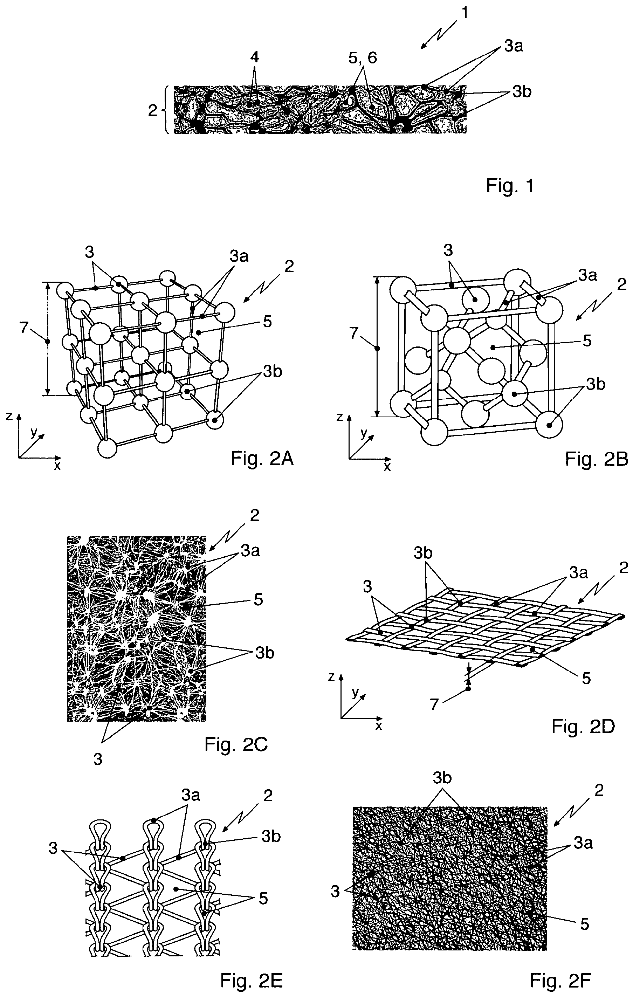

Die **Fig. 1** zeigt den prinzipiellen Aufbau eines folienartigen Funktionsmaterials 1 im Querschnitt. Das folienartige Funktionsmaterial 1 weist ein aus einem Konstruktionswerkstoff bestehendes, in Form einer Matrix ausgebildetes Trägermedium 2 auf, dessen Trägerelemente 3, die als linienförmige Trägerelemente 3a und als knotenförmige Trägerelemente 3b ausgebildet sind, mit einem ersten Funktionswerkstoff 4, der eine erste Funktion erfüllt, umhüllend beschichtet sind. Durch die Trägerelemente 3a, 3b werden Teilvolumina 5 aufgespannt, die mit einem zweiten Funktionswerkstoff 6, das mindestens eine zweite, sich von der ersten Funktion unterscheidende Funktion erfüllt, ausgefüllt sind. Die Elektrodenfolie 1 kann je nach Anwendung auch als folienartiges Elektrodenmaterial 1 oder als folienartiges Anodenmaterial 1 oder als Anodenfolie 1 oder als folienartiges Kathodenmaterial 1 oder als Kathodenfolie 1 bezeichnet werden, wobei dann die Ober- und/oder die Unterseite der Elektrodenfolie 1 vollständig mit dem zweiten Funktionswerkstoff 6 bedeckt sind.

In Fig. 2A ist eine einfache prinzipielle Ausführungsform eines Trägermediums 2 schematisch dargestellt. Linienförmige Trägerelemente 3a und knotenförmige Trägerelemente 3b befinden sich nur in senkrecht zueinander stehenden Ebenen. Die Trägerelemente 3a und 3b spannen miteinander verbundene und nach allen Seiten offene freie Teilvolumina 5 auf. Das Trägermedium 2 ist folienartig ausgebildet, das heißt, seine x- und y- Ausdehnungen sind viel größer als seine Ausdehnung in z- Richtung, die als querschnittliche Ausdehnung 7 des Trägermediums 2 bezeichnet wird. Diese Bedingung gilt stets im Rahmen dieser Erfindung, auch wenn die Figuren dies nicht immer deutlich veranschaulichen. Ein Trägermedium 2 baut sich immer aus zwei verschiedenen Typen von Trägerelementen 3a und 3b auf, welche alle im Trägermedium 2 enthaltenen, aus dem Konstruktionswerkstoff bestehenden Strukturelementen umfassen. Linienförmige Trägerelemente 3a sind beispielsweise Garne in Textilien beziehungsweise polymere Fäden in expandierten Polymeren oder linienförmige Gebilde, Molekülfasern, Spinnfasern, Textilfasern, Filamente oder andere linienförmige Gebilde. Knotenförmige Trägerelemente 3b sind beispielsweise gekreuzte Fäden von Kett- und Schussgarnen in textilen Geweben, miteinander verschlungene Fäden, eine kompakte Konzentration von fadenförmigen Elementen des Konstruktionswerkstoffes, eine punktförmige Ansammlung von Elementen des Konstruktionswerkstoffes beispielsweise in expandierten Polymeren, dreidimensionale Stoffhaufen des Konstruktionswerkstoffes oder Ähnliches. Die Trägerelemente 3 spannen Teilvolumina 5 auf, die miteinander verbunden und seitlich und vor allem zur Oberseite und zur Unterseite des Trägermediums 2 hin offen sind. Im speziellen Fall des Trägermediums 2 in Fig. 2A befinden sich die linienartigen Trägerelemente 3a und die knotenförmigen Trägerelemente 3b immer in senkrecht zueinander stehenden parallelen Ebenen.

Es wird dann von einem Trägermedium 2 gesprochen, wenn das Trägermedium 2 eine dreidimensionale Ausdehnung aufweist. Es wird demnach schon dann von einem Trägermedium 2 gesprochen, wenn alle Trägerelemente 3 quasi in einer Ebene liegen, diese jedoch keine zweidimensionale Fläche mehr darstellt, sondern eine dreidimensionale Ausdehnung besitzt.

In **Fig. 2B** ist eine schematische Darstellung einer ungeordneteren Anordnung eines Trägermediums 2 im Vergleich zum Trägermedium 2 aus Fig. 2A, als eine der typischeren Formen eines Trägermediums 2 für ein folienartiges Funktionsmaterial, dargestellt. Diese schematische Darstellung soll zeigen, dass es für ein Trägermedium 2 nicht zwingend gefordert ist, dass es eine geordnete Struktur aufweist. Die Verteilung der linienförmigen Trägerelemente 3a und der knotenförmigen Trägerelemente 3b kann durchaus auch ungeordnet sein. Auch im Fall der Fig. 2B spannen die Trägerelemente 3a und 3b miteinander verbundene und nach allen Seiten offene freie Teilvolumina 5 auf.

In **Fig. 2C** ist eine Rasterelektronenmikroskopaufnahme, nachfolgend kurz REM-Aufnahme genannt, in einer Draufsicht einer expandierten Polytetrafluorethylen-Folie, ePTFE genannt, als Trägermedium 2 gezeigt. Linienförmige Trägerelemente 3a und knotenförmige Trägerelemente 3b sind ungeordnet. Die linienförmigen Trägerelemente 3a sind orientierte Molekülfasern, die knotenförmigen Trägerelemente 3b stellen punktförmige Anhäufungen von Polytetrafluorethylen-Werkstoffkomponenten dar. Die orientierten Molekülfasern, d.h. die linienförmigen Trägerelemente 3a und die knotenförmigen Trägerelemente 3b, spannen Teilvolumina 5 auf. Die Teilvolumina 5 sind miteinander verbunden.

In **Fig. 2D** ist schematisch ein Trägermedium 2 in Form eines textilen Gewebes dargestellt. Die linienförmigen Trägerelemente 3a sind Garne, Fäden oder Drähte, die als Kettfäden und Schussfäden bezeichnet werden. Die knotenförmigen Trägerelemente 3b sind diejenigen Bereiche, in denen sich Kettfäden und Schussfäden kreuzen. Das als textiles Gewebe ausgebildete Trägermedium 2 in Fig. 2D ist ein Beispiel dafür, dass alle Trägerelemente 3 quasi in einer Ebene liegen, trotzdem weist das Trägermedium 2 eine dreidimensionale Ausdehnung auf. Zwischen den linienförmigen Trägerelementen 3a, den Kettfäden und den Schussfäden sowie deren Kreuzungspunkten, den knotenförmigen Trägerelementen 3b, werden offene Teilvolumina 5 aufgespannt. Der Abstand, der sich aus der Überkreuzung von Kettfaden und Schussfaden ergibt, entspricht der querschnittlichen Ausdehnung 7 des Trägermediums 2.

In **Fig. 2E** ist eine schematische Darstellung einer Draufsicht eines textilen Gewirkes als Trägermedium 2 wiedergegeben. Solche folienartigen textilen Gebilde können aus Fadensystemen durch Maschenbildung auf einer Wirkmaschine industriell hergestellt werden, sie gehören zu den Maschenwaren. Die linienförmigen Trägerelemente 3a sind in diesem Fall textile Fäden, die knotenförmigen Trägerelemente 3b werden von ineinander verschlungene Fäden ausgebildet. Zwischen den linienförmigen Trägerelementen 3a, die von textilen Fäden ausgebildet werden, sowie deren verschlungenen übereinanderliegenden Anteilen der textilen Fäden, den knotenförmigen Trägerelementen 3b, werden offene Teilvolumina 5 aufgespannt. Der Abstand, der sich aus den verschlungenen übereinanderliegenden Anteilen der textilen Fäden ergibt, entspricht der querschnittlichen Ausdehnung 7 des Trägermediums 2.

In **Fig. 2F** ist eine REM-Aufnahme einer Draufsicht eines Geflechts als Trägermedium 2 dargestellt. Die linienförmigen Trägerelemente 3a werden von textilen Fäden ausgebildet, die knotenförmigen Trägerelemente 3b werden von Kreuzungen beziehungsweise Anhäufungen von textilen Fäden ausgebildet. In diesem Beispiel ist die Verteilung der linienförmigen Trägerelemente 3a und der knotenförmigen Trägerelemente 3b stochastisch. Zwischen mehreren sich kreuzenden textilen Fäden, den knotenförmigen Trägerelementen 3b, und einer verhältnismäßig großen Anzahl von textilen Fäden, den linienförmigen Trägerelementen 3a, werden offene Teilvolumina 5 aufgespannt.

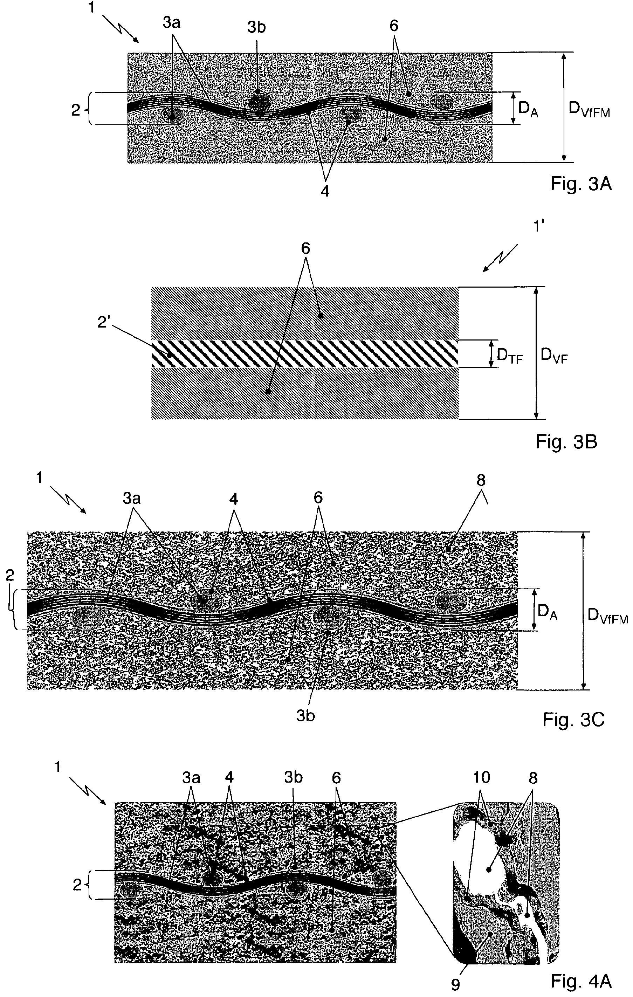

In **Fig. 3A** ist schematisch ein folienartiges Funktionsmaterial 1, bestehend aus einem textilen Trägermedium 2, im Querschnitt dargestellt. Die linienförmigen Trägerelemente 3a, die textilen Kettfäden und Schussfäden sowie deren Kreuzungsbereiche, die knotenförmigen Trägerelemente 3b des textilen Trägermediums 2, einem textilen Gewebe, sind von einem ersten Funktionswerkstoff 4, der eine erste Funktion erfüllt, umhüllt. Die Teilvolumina 5 sind mit einem zweiten Funktionswerkstoff 6, welcher mindestens eine zweite, sich von der ersten Funktion unterscheidende zweite Funktion erfüllt, ausgefüllt. Die Ober- und die Unterseite des Trägermediums 2 sind mit dem zweiten Funktionswerkstoff 6 bedeckt. Das Trägermedium 2 ist ein Glasgewebe, dessen prinzipieller Aufbau in Fig. 2D gezeigt ist. Sowohl auf die linienförmigen Trägerelemente 3a als auch auf die knotenförmigen Trägerelemente 3b ist ein erster Funktionswerkstoff 4, der eine erste Funktion erfüllt, aufgebracht. Der erste Funktionswerkstoff 4 umhüllt die linienförmigen und die knotenförmigen Trägerelemente 3a und 3b. D_{A} bezeichnet die querschnittliche Ausdehnung 7 des Trägermediums 2, dessen Trägerelemente 3 mit dem ersten Funktionswerkstoff 4 umhüllt sind.

D_{VfFM} bezeichnet die Dicke des folienartigen Funktionsmaterials 1, dessen Ober- und Unterseite mit dem zweiten Funktionswerkstoff 6 beschichtet sind.

**Fig. 3B** zeigt als Vergleich zu dem in Fig. 3A gezeigten folienartigen Funktionsmaterial 1 eine konventionelle Elektrodenfolie nach dem Stand der Technik mit einer Metallfolie 2' beziehungsweise einer metallisierten Folie, vorzugsweise einer metallisierten Polymerfolie, als Trägermedium 2', im Querschnitt. Auf das Trägermedium 2' ist beidseitig der gleiche Funktionswerkstoff 6, mit dem die offenen Teilvolumina 5 des folienartigen Funktionsmaterials 1 gemäß Fig. 3A ausgefüllt und die Ober- und Unterseite haftfest beschichtet worden sind, aufgetragen. Dabei entspricht D_{TF} der Dicke der Metallfolie 2', die sowohl als Trägermedium fungiert als auch die Funktion des Ladungsträgerzu- und -abtransports erfüllt. D_{VF} entspricht der Dicke der Elektrodenfolie. Die Dicke D_{VF} der Elektrodenfolie aus Fig. 3B entspricht der Dicke D_{VfFM} des beidseitig mit dem zweiten Funktionswerkstoff 6 beschichteten folienartigen Funktionsmaterials 1 aus Fig. 3A, die mit D_{VfFM} bezeichnet ist. Es gilt somit D_{VfFM} = D_{VF}.

**Fig. 3C** zeigt im Querschnitt eine detaillierte schematische Darstellung des in Fig. 3A gezeigten folienartigen Funktionsmaterials 1. Dabei erfüllt der zweite Funktionswerkstoff 6 mindestens eine aktive und mindestens eine nichtaktive Funktion. Der zweite Funktionswerkstoff 6 weist als innere Struktur offene Poren 8 auf, die jedoch nicht den Teilvolumina 5 entsprechen.

Prinzipiell zeichnet sich das erfindungsgemäße folienartige Funktionsmaterial 1 durch einen großen Volumen- bzw. Masseanteil am zweiten Funktionswerkstoff 6 bezogen auf das Gesamtvolumen bzw. die Gesamtmasse des folienartigen Funktionsmaterials 1, aus. Dies ist für die Anwendung des folienartigen Funktionsmaterials 1 von entscheidender Bedeutung, weil dadurch ein großer Anteil des Gesamtvolumens bzw. der Gesamtmasse des folienartigen Funktionsmaterials 1 vom zweiten, eine aktive Funktion erfüllenden Funktionswerkstoff 6 eingenommen wird.

In **Fig. 4A** ist eine Anodenfolie 1 für einen Aluminium-Elektrolytkondensator im Querschnitt dargestellt, also ein folienartiges Funktionsmaterial 1 in einer Anwendung als Elektrode, bei der das Trägermedium 2 ein Glasgewebe, wie in Fig. 2D gezeigt, ist. Die Trägerelemente 3 sind mit Aluminium als erstem Funktionswerkstoff 4 umhüllend beschichtet. Die Schichtdicke kann je nach Elektrodentyp in einem Bereich von 0,2 µm bis 4 µm liegen. In die Teilvolumina 5 ist als zweiter Funktionswerkstoff 6 hochporöses Aluminium eingebracht. Das hochporöse Aluminium befindet sich auch auf der Oberseite und der Unterseite des Trägermediums 2. In der im rechten Teil der Fig. 4A gezeigten Ausschnittvergrößerung ist zu erkennen, dass das hochporöse Aluminium aus einem hochporösen Aluminiumkörper 9 und aus Aluminiumoxidschichten 10, die sich auf den Oberflächen des hochporösen Aluminiumkörpers 9 ausgebildet haben, sowie offenen Poren 8 besteht. Offene Poren 8 im zweiten Funktionswerkstoff 6 dienen bei einer Anwendung des folienartigen Funktionsmaterials 1 als Elektrode eines elektrischen Energiespeichers der Aufnahme eines Elektrolyten. Die Aluminiumoxidschicht 10 ist auf der Oberfläche des hochporösen Aluminiumkörpers 9 durch anodische Oxidation erzeugt worden, die die Dielektrikumsschicht des Aluminium-Elektrolytkondensators darstellt. Der hochporöse Aluminiumkörper erfüllt eine nichtaktive Funktion, nämlich den Ladungsträgerzu- und -abtransport. Die Aluminiumoxidschicht 10 erfüllt die aktive Funktion der Ladungsträgerspeicherung, also die Ladungsträgerspeicherung als charakteristische Funktion der Anwendung des folienartigen Funktionsmaterials 1 als Anodenfolie 1 für einen Aluminium-Elektrolytkondensator. Die offenen Poren 8 sind mit Elektrolyt befüllt. Sie erfüllen in diesem Sinne eine nichtaktive Funktion, indem sie das Volumen für den Elektrolyten bereitstellen. Das Einbringen des hochporösen Aluminiums in die Teilvolumina 5 sowie das Auftragen auf die Oberseite und die Unterseite des Trägermediums 2 erfolgt vorzugsweise durch vakuumtechnische Beschichtungsverfahren.

Die Menge an Aluminium, als erstem Funktionswerkstoff 4, der die Trägerelemente 3 umhüllt, muss eine Dimension haben, die den elektrischen Leitungsanforderungen genügen kann. Dem entspricht in der Regel eine Aluminiumschicht mit einer Dicke zwischen 0,2 µm und 4 µm. Zur Gewährleistung dieser Anforderungen wird beispielsweise als Trägermedium 2 ein Glasgewebe mit jeweils zweiundzwanzig Kettfäden und Schussfäden pro Zentimeter eingesetzt. Das Gewebe ist abgeflacht. Durch die Kompression entstehen Kettfäden und Schussfäden mit einer Breitenausdehnung von 180 µm und einer Fadenhöhe von 15,5 µm. Auf diese Fäden ist der erste Funktionswerkstoff 4, in Form einer Aluminiumschicht umhüllend, aufgebracht worden, die sich durch hervorragende elektrische Leitungseigenschaften auszeichnet. Das Trägermedium ist somit mit dem ersten Funktionswerkstoff 4, also Aluminium, metallisiert, wobei die Schichtdicke des auf die Kett- und Schussfäden diese umhüllend aufgebrachten Aluminiums im Mittel zirka 2,5 µm beträgt. Somit ergibt sich eine querschnittliche Ausdehnung 7 des metallisierten Trägermediums 2 von 36 µm. In die Teilvolumina 5 des metallisierten Trägermediums 2, also in den Maschenräumen des Glasgewebes, wurde als zweiter Funktionswerkstoff 6 hochporöses Aluminium abgeschieden. Auf die Ober- und Unterseite des folienartigen Funktionsmaterials 1 wurde ebenfalls hochporöses Aluminium mit jeweils 32 µm Schichtdicke abgeschieden. Die gesamte Dicke der Anodenfolie 1 beträgt 100 µm.

Das mit Aluminium als erstem Funktionswerkstoff 4 metallisierte Trägermedium 2 nimmt ein Volumen von 0,00156 cm³ bezogen auf einen Quadratzentimeter Grundfläche der Anodenfolie 1 ein. Das Gesamtvolumen der Anodenfolie 1 bezogen auf einen Quadratzentimeter Grundfläche umfasst 0,01 cm³. Somit beträgt der Volumenanteil des Trägermediums 2 und des ersten Funktionswerkstoffes etwa 15,6 %, der Volumenanteil des zweiten Funktionswerkstoffes 6, nämlich des hochporösen Aluminiums, beträgt zirka 84,4 %.

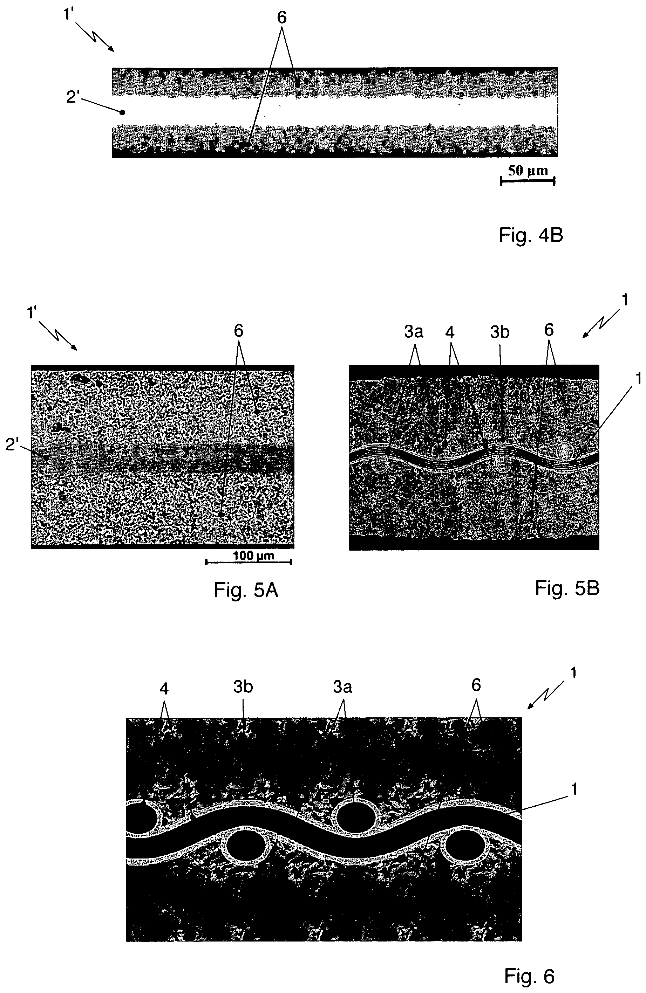

Im Gegensatz dazu nimmt bei einer konventionellen Anodenfolie 1' das Trägermedium 2' einen erheblich größeren Anteil am Gesamtvolumen der Anodenfolie 1' ein. Eine mögliche Ausführungsform einer solchen konventionellen Anodenfolie 1' nach dem Stand der Technik ist in **Fig. 4B** im Querschnitt dargestellt. Diese Anodenfolie 1' ist aus einer hochreinen Aluminiumfolie durch elektrochemisches Ätzen hergestellt worden, wobei der innere Anteil unbearbeitet geblieben ist. Dieser Anteil stellt das Trägermedium 2' der Anodenfolie 1' dar. Bei einer konventionellen Anodenfolie 1' mit einer Dicke von 100 µm, wie sie in der REM-Aufnahme Fig. 4B dargestellt ist, beträgt die Dicke des Trägermediums 2', welche nicht elektrochemisch geätzt wurde, zirka 28,6 µm und der elektrochemisch geätzte Bereich zirka 71,4 µm, was einer Dicke dieses Bereiches von zirka 35,7 µm pro Seite entspricht. Nach einem sogenannten Formiervorgang, einer elektrochemischen beziehungsweise anodischen Oxidation, entsteht die Anodenfolie 1'. Das Trägermedium 2' übt die Trägerfunktion aus und ist gleichzeitig für die Ladungsträgerzu- und -abführung zuständig. Der elektrochemisch geätzte Bereich übt die eigentliche Kondensatorfunktion, also die Speicherung von Ladungsträgern, aus. Es kann abgeschätzt werden, dass das Verhältnis der Dicke D_{TF} zwischen Trägermedium 2' und der die eigentliche Kondensatorfunktion ausübenden Schicht etwa eins zu zweieinhalb, also 1 zu 2,5, ist.

Das Trägermedium 2' der konventionellen Anodenfolie 1' nimmt ein Volumen bezogen auf einen Quadratzentimeter von 0,00286 cm³ ein. Das entspricht etwa 28,6 % des gesamten Volumens der konventionellen Anodenfolie 1' nach dem Stand der Technik. Der die Kondensatorfunktion ausübende Bereich der konventionellen Anodenfolie 1' nimmt ein Volumen bezogen auf einen Quadratzentimeter Grundfläche von 0,0032 cm³ ein. Das entspricht etwa 71,4 % des gesamten Volumens. Demgegenüber stehen bei der erfindungsgemäßen Lösung 84,4 % des Gesamtvolumens zur Ausübung der Kondensatorfunktion, also der Speicherung von Ladungsträgern, zur Verfügung.

Im Falle der Anodenfolie 1 für einen Aluminium-Elektrolytkondensatoren lässt sich der Anteil des zur Erfüllung der Kondensatorfunktion zur Verfügung stehenden Volumens für den zweiten Funktionswerkstoff 6 weiter auf bis zu 94 % erhöhen, indem zum Beispiel die Anzahl der Kettgarne und Schussgarne weiter verringert wird oder anstelle von Garnen mit Filamenten, die einen Durchmesser von 5 µm aufweisen, Garne mit Filamenten, deren Durchmesser 4 µm betragen, verwendet werden.

In **Fig. 5A** ist eine REM-Aufnahme einer Kathode 1' einer Lithium-Ionen-Zelle nach dem Stand der Technik im Querschnitt dargestellt. Der Begriff Kathode ist hierbei immer im Sinn der Entladung der Zelle zu verstehen. Die Elektrode gehört zu den sogenannten Lithium-Metalloxid-Elektroden. Eine solche konventionelle Kathode 1' besteht aus einem intrinsisch, elektrisch schlecht leitenden Aktivmaterial wie beispielsweise Lithium und Nickeloxid, Lithium und Manganoxid, Lithium und Kobaltoxid oder Lithium und Eisenphosphat sowie einer Reihe von Additiven, als Funktionswerkstoff der nichtaktive Funktionen erfüllt. Ein wichtiges Additiv zur Herstellung der elektrischen Leitfähigkeit ist dabei Ruß. Als Trägermedium 2' dient hier eine Aluminiumfolie.

Die Anode eines Lithium-Ionen-Akkumulators, welche hier nicht dargestellt ist, besteht aus Graphit und wird deshalb auch als Graphitelektrode bezeichnet. Das Trägermedium 2' für die Kathode, die auch als Stromableiter bezeichnet wird, ist eine Aluminiumfolie 2' und für die nicht dargestellte Anode eine Kupferfolie. Auch in der gezeigten Anwendung in Fig. 5A ist das Trägermedium 2' eine Aluminiumfolie mit einer Dicke vom 30 µm. Der Einsatz einer solchen Aluminiumfolie ist als Stand der Technik zu betrachten. Des Weiteren existieren im Stand der Technik Lösungen, deren Trägermedium 2' eine Aluminiumfolie mit einer Dicke von 15 µm ist. Es wird der Einsatz von 10 µm dicken Aluminiumfolien als Trägermedium 2' angestrebt. Die gesamte Dicke der Kathodenfolie beträgt etwa 194 µm.

In **Fig. 5B** ist schematisch die Anwendung eines folienartigen Funktionsmaterials 1 als Kathode 1 einer Lithium-Ionen-Zelle im Querschnitt gezeigt. Das folienartige Funktionsmaterial 1 besitzt ein dreidimensionales textiles Flächengebilde als Trägermedium 2 in Form eines Glasgewebes mit jeweils 18 Kettfäden und 18 Schussfäden pro Zentimeter. Die linienförmigen Trägerelemente 3a Kette und Schuss besitzen einen annähernd runden Querschnitt mit einem Durchmesser von etwa 35 µm. Die Bereiche, in denen sich die Kettfäden und die Schussfäden kreuzen, bilden die knotenförmigen Trägerelemente 3b aus. Auf die Trägerelemente 3a und 3b ist umhüllend Aluminium als erster Funktionswerkstoff 4 aufgebracht. Die Schichtdicke des aufgebrachten Aluminiums beträgt zirka 7 µm. Die Teilvolumina 5 des metallisierten Trägermediums 2, also die Maschenräume 5 zwischen den Kettfäden und den Schussfäden, sind mit dem zweiten Funktionswerkstoff 6 ausgefüllt. Ober- und Unterseite des folienartigen Funktionsmaterials 1 sind zusätzlich jeweils mit dem zweiten Funktionswerkstoff 6 mit einer Dicke von 55 µm beschichtet. Der zweite Funktionswerkstoff 6 besteht aus einem Gemisch von Lithium-Eisenphosphat, Leitruß, Lösungsmittel, Binder und Additiven. Die neuartige Kathode 1 wurde kalandert. Unter Kalandern ist dabei zu verstehen, dass das folienartige Funktionsmaterial 1 durch die Spalten zwischen mehreren aufeinander angeordneten beheizten und polierten Walzen nacheinander hindurchgeführt wird, wodurch eine Verdichtung und Verfestigung des folienartigen Funktionsmaterials 1, also der Kathode 1, bewirkt wird. Die Dicke D_{VfFM} der Kathoden 1 beträgt nach diesen Prozessen 194 µm, wodurch eine Vergleichbarkeit mit der in Fig. 5A dargestellten Lösung aus dem Stand der Technik leicht möglich ist.

Das Trägermedium 2' in Form einer Aluminiumfolie der in Fig. 5 A dargestellten Kathode 1' nach dem Stand der Technik besitzt ein auf einen Quadratzentimeter bezogenes Volumen von 0,003 cm³. Das entspricht etwa 15,5 % des Gesamtvolumens der Kathode 1'. Der beidseitig auf das Trägermedium 2' aufgebrachte zweite Funktionswerkstoff 6 nimmt ein Volumen bezogen auf einen Quadratzentimeter Grundfläche von 0,0164 cm³ ein. Das entspricht etwa 84,5 % des Gesamtvolumens.

Bei Verwendung einer 15 µm dicken Aluminiumfolie als Trägermedium 2' würde das Volumen des zweiten Funktionswerkstoffes 6 zirka 0,018 cm³ betragen. Das entspräche etwa 92,3 % des Gesamtvolumens der Kathode 1'. Bei Verwendung einer 10 µm dicken Aluminiumfolie als Trägermedium 2' würde das Volumen des zweiten Funktionswerkstoffes 6 zirka 0,0184 cm³ betragen. Das entspräche etwa 94,85 % des Gesamtvolumens der Kathode 1'.

Bei der in Fig. 5B dargestellten Lösung einer Kathode 1 unter Anwendung eines folienartigen Funktionsmaterials nimmt das Volumen des Trägermediums 2, dessen Trägerelemente 3 mit dem ersten Funktionswerkstoff 4 umhüllend beschichtet sind, zirka 4,7 % vom Gesamtvolumen der Kathode 1 ein. Somit beträgt der Anteil des Volumens des zweiten Funktionsmaterials 6 zirka 95,3 % vom Gesamtvolumen der Kathode 1. Im Vergleich dazu ist bei einer in Fig. 5A gezeigten Lösung aus dem Stand der Technik selbst bei Verwendung einer 10 µm dicken Aluminiumfolie als Trägermedium 2', was bisher technisch nicht realisierbar ist, nur ein Anteil des zweiten Funktionswerkstoffes 6 vom Gesamtvolumen der Kathode 1' von maximal 94,85 % möglich.

In **Fig. 6** ist schematisch im Querschnitt eine Anode 1 einer Lithium-Ionen-Zelle unter Anwendung eines folienartigen Funktionsmaterials dargestellt. Die Anode 1 weist ein Stahldrahtgewebe als Trägermedium 2 mit jeweils zwanzig Kettdrähten und zwanzig Schussdrähten pro Zentimeter auf. Kette und Schuss sind demnach Monofilamente und haben einen Durchmesser von etwa 15 µm. Auf die Trägerelemente 3 (Drähte als linienförmige Trägerelemente 3a und deren Kreuzungspunkte als knotenförmige Trägerelemente 3b) ist als erster Funktionswerkstoff 4 eine kompakte Kupferschicht mit einer Dicke von zirka 4 µm umhüllend aufgebracht. Die von den Trägerelementen 3 aufgespannten Teilvolumina 5 sind mit dem zweiten Funktionswerkstoff 6 aufgefüllt. Die Ober- und die Unterseite des folienartigen Funktionsmaterials 1 sind jeweils mit dem zweiten Funktionswerkstoff 6 mit einer Dicke von 75 µm beschichtet. Der zweite Funktionswerkstoff ist Graphit mit offenen Poren. Die Anode 1 wurde, wie auch nach dem Stand der Technik üblich, kalandert. Die Dicke D_{VfFM} der Anode 1 beträgt nach dem Kalandern 188 µm.

Eine zu der in Fig. 6 dargestellten Anode 1 vergleichbare Anode für einen Lithium-Ionen-Akkumulator nach dem Stand der Technik besteht aus auf eine Kupferfolie haftfest aufgetragenem Graphit. Bei Verwendung einer 15 µm dicken Kupferfolie nimmt diese bezogen auf einen Quadratzentimeter Anodengrundfläche ein Volumen von 0,0015 cm³ ein. Das entspricht etwa 8,0 % des Gesamtvolumens der Anode. Das auf die Kupferfolie haftfest aufgetragene Graphit, also der zweite Funktionswerkstoff 6, nimmt bezogen auf einen Quadratzentimeter Anodengrundfläche ein Volumen von 0,0173 cm³ ein. Das entspricht etwa 92,0 % des Gesamtvolumens der Anode. Bei Verwendung einer 6 µm dicken Kupferfolie nimmt diese bezogen auf einen Quadratzentimeter Anodengrundfläche ein Volumen von 0,0006 cm³ ein. Das entspricht etwa 3,2 % des Gesamtvolumens der Anode. Das auf die Kupferfolie haftfest aufgetragene Graphit, also der zweite Funktionswerkstoff 6, nimmt bezogen auf einen Quadratzentimeter Anodengrundfläche ein Volumen von 0,0182 cm³ ein. Das entspricht etwa 96,8 % des Gesamtvolumens der Anode.

Im Vergleich dazu nimmt bei der in Fig. 6 gezeigten Lösung das Trägermedium 2, dessen Trägerelemente 3 mit einer kompakten Kupferschicht mit einer Dicke von zirka 4 µm umhüllend beschichtet sind, bezogen auf einen Quadratzentimeter Anodengrundfläche ein Volumen von zirka 0,0002 cm³ ein, was etwa 1,1 % vom Gesamtvolumen der Anode ausmacht. Der zweite Funktionswerkstoff 6, also das Graphit, nimmt bezogen auf einen Quadratzentimeter Anodengrundfläche ein Volumen von zirka 0,0186 cm³ ein. Somit beträgt der Anteil des zweiten Funktionswerkstoffes 6 am Gesamtvolumen der Anode 1 98,9 %.

Die Herstellung einer erfindungsgemäßen Kathode 1 bzw. Anode 1 unter Verwendung eines folienartigen Funktionsmaterials kann wie folgt erfolgen:
Als Trägermedium 2 wird ein textiles Gewebe verwendet. Die Trägerelemente 3, also Kette und Schuss als linienförmige Trägerelemente 3a und Kreuzungsbereich von Kette und Schuss als knotenförmige Trägerelemente 3b, sind mit einem dem Verwendungszweck entsprechenden elektrisch leitfähigen Metall, zum Beispiel Aluminium oder Kupfer, als erstem Funktionswerkstoff 4, haftfest umhüllend beschichtet. Die Schichtdicke liegt zwischen 1 µm und 4 µm. Im Verständnis der Erfindung dient das Trägermedium 2 der mechanischen Stabilität des folienartigen Funktionsmaterials 1 und der erste Funktionswerkstoff 4 erfüllt die nichtaktive Funktion der Ladungsträgerzu- und -ableitung. Gleichwohl kann der erste Funktionswerkstoff 4 auch zur Erhöhung der mechanischen Stabilität des folienartigen Funktionsmaterials 1 beitragen.

Die Beschichtung der Trägerelemente 3 mit dem ersten Funktionswerkstoff 4 kann mit vakuumtechnischen PVD-Verfahren oder Thermospritzverfahren, bei denen je nach Verfahrensdurchführung ggf. eine thermische Nachbehandlung, wie bereits beschrieben, erfolgen kann, durch die beschriebenen chemischen und elektrochemischen Verfahren oder durch Schmelztauchen des Trägermediums in einem schmelzflüssigen Metallbad, wobei hierbei die Schmelztemperatur des Metalls unterhalb derjenigen Temperatur liegen muss, die zur Zerstörung des textilen Gewebes führen würde, realisiert werden. Nachfolgend werden die von den mit dem ersten Funktionswerkstoff 4 umhüllend beschichteten Trägerelemente 3 aufgespannten Teilvolumina 5 mit dem zweiten Funktionswerkstoff 6 befüllt. Es entsteht ein folienartiges Funktionsmaterial 1, welches im Folgenden mittels aus dem Stand der Technik bekannten Verfahren zu einer Kathode 1 oder Anode 1 weiterverarbeitet wird.

Zur Herstellung einer Kathode 1 oder Anode 1 werden Ober- und Unterseite des folienartigen Funktionsmaterials 1 mit dem zweiten Funktionswerkstoff 6 beschichtet. Der zweite Funktionswerkstoff 6 ist beispielsweise eine aus dem Stand der Technik bekannte Beschichtungsmasse - slurry genannt -. Der zweite Funktionswerkstoff erfüllt als aktive Funktion die Ladungsträgerspeicherung und als nichtaktive Funktion den Ladungsträgerzu- und -abtransport zu den Speicherorten im zweiten Funktionswerkstoff 6. Er kann darüber hinaus auch zur mechanischen Stabilisierung beitragen. Die Beschichtungsmasse befindet sich in einem Speicher, in dem die Bestandteile auch gemischt werden können, und wird durch ein Auftragssystem, also ein Auftragswerkzeug, auf beide Seiten des folienartigen Funktionsmaterials 1 aufgetragen.

Die der Beschichtung nachfolgenden Prozesse, wie zum Beispiel das Trocknen, können entsprechend dem Stand der Technik erfolgen.

Ein als Trägermedium 2 für ein erfindungsgemäßes folienartiges Funktionsmaterial 1 geeignetes textiles Gewebe sollte sich nicht zwingend durch eine hohe Dichte von Kett- und Schussfäden auszeichnen, sondern von den Kett- und Schussfäden als linienförmige Trägerelemente 3a sowie deren Kreuzungspunkten als knotenförmige Trägerelemente 3b sollten hinreichend große Teilvolumina 5 aufgespannt werden, jedoch unter der Maßgabe, dass die mechanische Stabilität des textilen Gewebes für die Trägerfunktion ausreichend hoch ist.

Das bedeutet, ein als Trägermedium 2 geeignetes textiles Gewebe muss sich nicht zwingend durch eine besonders kleine querschnittliche Ausdehnung 7 oder eine besonders kleine Maschenweite auszeichnen.

Jedoch ist es in vielen Fällen sinnvoll, den Durchmesser der Filamente, aus denen Garne für Kett- und Schussfäden für ein Trägermedium 2 bestehen, möglichst gering zu halten, um den Volumenanteil des Trägermediums 2 am Gesamtvolumen des folienartigen Funktionsmaterials 1 hinreichend klein zu halten, natürlich unter der Maßgabe, dass die mechanische Stabilität des textilen Gewebes für die Trägerfunktion ausreichend hoch ist.

Nachfolgend wird eine Anodenfolie für einen Aluminium-Elektrolytkondensator beschrieben:
Die Anodenfolie besitzt eine Dicke von 100 µm. Das Trägermedium 2 ist ein Glasgewebe (EC5 5.5 1x0 5 5.5 1x0). Dieses Glasgewebe weist eine Fadendichte von 22 Kettfäden und 22 Schussfäden pro cm auf. Die Kettfäden und Schussfäden bestehen jeweils aus Filamenten mit einem Durchmesser von 5 µm, wobei die Fadenbreite 160 µm und die Fadenhöhe 17,5 µm beträgt. Auf die Kettfäden und Schussfäden ist als erster Funktionswerkstoff 4 eine 2,5 µm dicke Aluminiumschicht aufgebracht. Das metallisierte Glasgewebe zeichnet sich durch folgende geometrische Größen aus:
➢ Die querschnittliche Ausdehnung 7 des metallisierten Gewebes beträgt 0,004 cm, also 40 µm.
➢ Die Maschen des metallisierten Glasgewebes haben eine Größe von zirka 0,031 cm x 0,031 cm.
➢ Das metallisierte Glasgewebe umfasst ein Volumen von zirka 0,004 cm³ bezogen auf einen cm² Glasgewebegrundfläche.
➢ Es werden zirka 38,36 % des Volumens des folienartigen Funktionsmaterials 1 vom metallisierten Glasgewebe eingenommen, die Summe der durch die linienförmigen und knotenförmigen Trägerelemente aufgespannten offenen, miteinander verbundenen Teilvolumina 5 umfasst 61,64 % dieses Volumens des folienartigen Funktionsmaterials 1.

Die Teilvolumina 5 sind mit hochporösem Aluminium als zweitem Funktionswerkstoff 6 befüllt. Es entsteht ein folienartiges Funktionsmaterial 1. Zur Ausbildung der Anodenfolie werden Ober- und Unterseite des folienartigen Funktionsmaterials 1 ebenfalls mit hochporösem Aluminium beschichtet. Die so gefertigte Anodenfolie 1 zeichnet sich durch folgende geometrische Größen aus:
➢ Die Summe des Volumens des auf die Ober- und Unterseite des folienartigen Funktionsmaterials1 aufgebrachten hochporösen Aluminiums, also des zweiten Funktionswerkstoffes, beträgt 0,006 cm³, bezogen auf einen Quadratzentimeter Anodenfoliengrundfläche.
➢ Das Gesamtvolumen des hochporösen Aluminiums, also des zweiten Funktionswerkstoffes, das die für einen Elektrolytkondensator charakteristische Funktion der Ladungsträgerspeicherung erfüllt, beträgt 0,0085 cm³, bezogen auf einen Quadratzentimeter Anodenfoliengrundfläche.
➢ Das hochporöse Aluminium nimmt 85 % des Gesamtvolumens der Anodenfolie ein.

Bei einer anderen Anodenfolie für einen Aluminium-Elektrolytkondensator wird als Trägermedium 2 ein Glasgewebe mit einem Kett- und Schussgarn verwendet, das aus zirka 102 Filamenten mit einem Durchmesser von 5 µm besteht und dessen Fadendichte zwischen 15 bis 20 Fäden pro cm liegt. Durch Kompression des Fadenquerschnitts und Glättung der Fadenkrümmung bei biaxialem Zug wird eine signifikante Verringerung der querschnittlichen Ausdehnung 7 erzielt. Sie kann zwischen 25 µm bis 35 µm liegen, wobei die Maschen innerhalb eines Bereiches von 325 µm bis 550 µm x 325 µm bis 550 µm liegen. Bei dieser Anodenfolie kann der Anteil des Volumens des folienartigen Funktionsmaterials 1, der vom metallisierten Glasgewebe, dem metallisierten Trägermedium 2, belegt ist, auf 13,5 % gesenkt werden.

Bei einer weiteren Anodenfolie für einen Aluminium-Elektrolytkondensator wird als Trägermedium 2 ein Glasgewebe mit einem Kett- und Schussgarn verwendet, das aus zirka 51 Filamenten mit einem Durchmesser von 4 µm besteht und dessen Fadendichte zwischen 20 bis 25 Fäden pro cm liegt. Durch Kompression des Fadenquerschnittes und Glättung der Fadenkrümmung bei biaxialem Zug wird eine signifikante Verringerung der querschnittlichen Ausdehnung 7 erzielt. Sie kann zwischen 10 µm bis 18 µm liegen, wobei die Maschen innerhalb eines Bereiches von 300 µm bis 425 µm x 300 µm bis 425 µm liegen. Bei dieser Anodenfolie kann der Anteil des Volumens des folienartigen Funktionsmaterials 1, der vom metallisierten Glasgewebe, dem metallisierten Trägermedium 2, belegt ist, auf 5,5 % gesenkt werden.

Im Folgenden wird eine positive oder negative Elektrode für Lithium-Ionen-Akkumulatoren beschrieben:
Als Trägermedium 2 wird ein textiles Gewebe mit einem Kett- und Schussgarn, das aus zirka 102 Filamenten mit einem Durchmesser von 5 µm besteht und dessen Fadendichte zwischen 12 bis 18 Fäden pro cm liegt, verwendet. Die querschnittliche Ausdehnung 7 des Trägermediums 2 kann bis zu 100 µm betragen. Die Größe der Maschen kann innerhalb des Bereichs von 400 µm bis 725 µm x 400 µm bis 725 µm liegen. Die Trägerelemente 3 des Trägermediums 2, also Kette und Schuss als linienförmige Trägerelemente 3a und Kreuzungsbereich von Kette und Schuss als knotenförmige Trägerelemente 3b, werden mit einem dem Verwendungszweck, positive oder negative Elektrode, entsprechenden elektrisch leitfähigen Metall, Aluminium oder Kupfer, als erstem Funktionswerkstoff 4, haftfest umhüllend beschichtet. Der Anteil des von den metallisierten Trägerelementen 3 eingenommenen Volumens liegt bei zirka 6 % des vom Trägermedium 2 insgesamt aufgespannten Volumens.

Mit Garnen, die aus 51 Filamenten mit einem Durchmesser von 4 µm bestehen und einen nahezu runden Querschnitt besitzen, lassen sich Trägermedien 2 aus textilen Geweben und einer Fadendichte von zwischen 17 bis 22 Fäden pro Zentimeter herstellen, die eine querschnittliche Ausdehnung 7 von bis zu 65 µm aufweisen. Die Größe der Maschen liegt innerhalb des Bereichs von 425 µm bis 600 µm x 425 µm bis 600 µm. Der Anteil des von den metallisierten Trägerelementen 3 eingenommenen Volumens liegt dann bei zirka 3 % des vom Trägermedium 2 insgesamt aufgespannten Volumens.

### Bezugszeichenliste

- 1: folienartiges Funktionsmaterial, folienartiges Anodenmaterial bzw. Anodenfolie, folienartiges Kathodenmaterial bzw. Kathodenfolie
- 1': konventionelle Elektrodenfolie aus dem Stand der Technik, Anode beziehungsweise Kathode aus dem Stand der Technik, folienartiges Funktionsmaterial aus dem Stand der Technik, Anodenfolie für Elektrolytkondensatoren aus dem Stand der Technik,
- 2: Trägermedium
- 2': Trägermedium im Stand der Technik; Metallträgerfolie, metallisierte Polymerfolie, Aluminiumfolie im Stand der Technik
- 3: Trägerelement
- 3a: linienförmiges Trägerelement
- 3b: knotenförmiges Trägerelement
- 4: erstes Funktionsmaterial, erster Funktionswerkstoff
- 5: Teilvolumina, Maschenraum eines Gewebes
- 6: zweites Funktionsmaterial; zweiter Funktionswerkstoff
- 7: querschnittliche Ausdehnung des Trägermediums 2
- 8: offene Poren
- 9: Aluminiumkörper
- 10: Aluminiumoxidschichten

- D_{A}: querschnittliche Ausdehnung des Trägermediums 2
- D_{VfFM}: Dicke des beschichteten folienartigen Funktionsmaterials 1
- D_{TF}: Dicke der Trägerfolie 2'
- D_{TF}: Dicke der Elektrodenfolie

## Patentansprüche

1. Elektrodenfolie (1) für eine Anwendung in elektrischen Energiespeichern, in welcher ein aus mindestens einem Konstruktionswerkstoff ausgebildetes folienartiges, ein Trägergesamtvolumen umfassendes Trägermedium (2) mit einer querschnittlichen Ausdehnung (7) ≤ 100 µm angeordnet ist, das als eine Matrix anzusehen ist und sich aus linienförmig ausgebildeten Trägerelementen (3a), welche groß in einer Dimension, der großen Dimension, und klein in den beiden anderen Dimensionen, den beiden kleineren Dimensionen, ausgebildet sind, wobei das Verhältnis der großen Dimension zu den beiden kleineren Dimensionen wenigstens 50 : 1 und das Verhältnis der beiden kleineren Dimensionen zueinander nicht kleiner als 1 : 5 und nicht größer als 5 : 1 ist, und knotenförmig ausgebildeten Trägerelementen (3b), die die Werkstoffkomponenten des Trägermediums (2) bilden und das Trägergesamtvolumen durchsetzen, zu einer bänderförmigen Ausdehnung mit darin befindlichen, miteinander verbundenen Teilvolumina (5) des Trägergesamtvolumens, welche durch in Nachbarschaft befindliche Trägerelemente (3) aufgespannt werden, formiert, wobei die linienförmigen Trägerelemente (3a) wenigstens abschnittsweise große Abstände zueinander aufweisen, welche im Verhältnis zur größeren der beiden kleineren Dimensionen der linienförmigen Trägerelemente (3a) größer sind als 5 : 1, wobei die linienförmig ausgebildeten Trägerelemente (3a) und die knotenförmig ausgebildeten Trägerelemente (3b) mit einem ersten Funktionswerkstoff (4), welcher eine erste Funktion erfüllt, umhüllend beschichtet sind, und wobei das durch die miteinander verbundenen Teilvolumina (5) ausgebildete, verbleibende Volumen des Trägergesamtvolumens mit mindestens einem zweiten Funktionswerkstoff (6), welcher eine zweite, sich von der ersten Funktion unterscheidende Funktion erfüllt, vollständig aber nicht kompakt ausgefüllt ist.

2. Elektrodenfolie (1) nach Anspruch 1, **dadurch gekennzeichnet, dass** mindestens ein zweiter Funktionswerkstoff (6) die Oberseite und/oder die Unterseite des Trägermediums (2) bedeckt.

3. Elektrodenfolie (1) nach einem der Ansprüche 1 oder 2, **dadurch gekennzeichnet, dass** die linienförmig ausgebildeten Trägerelemente (3a) des Trägermediums (2) ein Gewebe ausbildendend, verflochtene, senkrecht zueinander verlaufende Kett- und Schussfäden sind.

4. Elektrodenfolie (1) nach einem der Ansprüche 1 bis 3, **dadurch gekennzeichnet, dass** der erste Funktionswerkstoff (4) ein Metall ist.

5. Elektrodenfolie (1) nach einem der Ansprüche 1 bis 4, **dadurch gekennzeichnet, dass** das Trägermedium (2) ein Glasfasergewebeband oder ein Kohlefasergewebeband oder ein Mineralwollefasergewebeband oder ein Polymerfasergewebeband oder ein Drahtgewebeband ist.

6. Elektrodenfolie (1) nach einem der Ansprüche 1 bis 5, **dadurch gekennzeichnet, dass** mindestens ein zweiter Funktionswerkstoff(6) eines der Stoffgemische aus der Gruppe Lithium/Nickeloxid, Lithium/Manganoxid, Lithium/Kobaltoxid und Lithium/Eisenphosphat sowie gegebenenfalls weitere Additive, vorzugsweise Ruß, enthält.

7. Verfahren zur Herstellung einer Elektrodenfolie (1) nach einem der Ansprüche 1 bis 6, folgende Schritte umfassend:
➢ Umhüllung von Trägerelementen (3) eines Trägermediums (2) durch Aufbringen eines ersten Funktionswerkstoffes (4), welcher eine erste Funktion erfüllt, auf die Trägerelemente (3) und
➢ Ausfüllen des durch die miteinander verbundenen Teilvolumina (5) ausgebildeten verbleibenden Volumens des Trägergesamtvolumens mit mindestens einem zweiten Funktionswerkstoff (6), welcher eine zweite, sich von der ersten Funktion unterscheidende Funktion erfüllt.

8. Verfahren nach Anspruch 7 **dadurch gekennzeichnet, dass** die Umhüllung der Trägerelemente (3) durch eine Metallisierung der Trägerelemente (3) erfolgt.

9. Verfahren nach einem der Ansprüche 7 oder 8, **dadurch gekennzeichnet, dass** das Trägermedium (2) ein Gewebeband ist.

10. Verfahren nach Anspruch 9, **dadurch gekennzeichnet, dass** das Trägermedium (2) ein Glasfasergewebeband oder ein Kohlefasergewebeband oder ein Mineralwollefasergewebeband oder ein Drahtgewebeband ist.

11. Verfahren nach einem der Ansprüche 8 bis 10, **dadurch gekennzeichnet, dass** die Metallisierung der Trägerelemente (3) durch eine physikalische Gasphasenabscheidung von Metall in einer Vakuumbeschichtungsanlage oder durch thermisches Spritzen oder durch Schmelztauchen des Trägermediums (2) in ein schmelzflüssiges Metallbad erfolgt.

12. Verfahren nach einem der Ansprüche 8 bis 10, **dadurch gekennzeichnet, dass** die Metallisierung der Trägerelemente (3) durch chemische Metallbeschichtung in einem zweistufigen Verfahren erfolgt, wobei die Metallisierung der Trägerelemente (3) folgende Schritte umfasst:
▪ Bekeimungsprozess und
▪ Metallbeschichtungsprozess
oder in einem dreistufigen Verfahren erfolgt, wobei die Metallisierung der Trägerelemente (3) folgende Schritte umfasst:
▪ Bekeimungsprozess,
▪ Metallbeschichtungsprozess und
▪ Metallschichtverstärkungsprozess.

## Claims

1. Electrode film (1) for use in electrical energy storage devices containing a film-like carrier medium (2) which consists of at least one structural material, comprises a carrier overall volume, has a cross-sectional extent (7) ≤ 100 µm, can be regarded as a matrix and consists of linear carrier elements (3a) which are large in one dimension, the large dimension, and small in the two other dimensions, the two smaller dimensions, wherein the ratio of the large dimension to the two smaller dimensions is at least 50:1 and the ratio of the two smaller dimensions to one another is not smaller than 1:5 and not greater than 5:1, and nodular carrier elements (3b) which form the material components of the carrier medium (2) and pass through the carrier overall volume, so as to form a strip-like extent containing interconnected partial volumes (5) of the carrier overall volume which are spanned by carrier elements (3) which are in proximity to one another, wherein some of the linear carrier elements (3a) have large spacings from one another which in relation to the larger of the two smaller dimensions of the linear carrier elements (3a) are greater than 5:1, wherein the linear carrier elements (3a) and the nodular carrier elements (3b) are coated with a sheath of a first functional material (4) which performs a first function, and wherein the remaining volume, formed by the interconnected partial volumes (5), of the carrier overall volume are completely but not compactly filled with at least one second functional material (6), which performs a second function different from the first function.

2. Electrode film (1) according to Claim 1, **characterized in that** at least one second functional material (6) covers the top side and/or the bottom side of the carrier medium (2).

3. Electrode film (1) according to one of Claims 1 and 2, **characterized in that** the linear carrier elements (3a) of the carrier medium (2) are interwoven warp and weft threads which extend perpendicularly in relation to one another and form a woven material.

4. Electrode film (1) according to one of Claims 1 to 3, **characterized in that** the first functional material (4) is a metal.

5. Electrode film (1) according to one of Claims 1 to 4, **characterized in that** the carrier medium (2) is a woven glass-fibre strip or a woven carbon-fibre strip or a woven polymer-fibre strip or a woven wire strip.

6. Electrode film (1) according to one of Claims 1 to 5, **characterized in that** at least one second functional material (6) contains one of the mixtures of substances from the following group: lithium/nickel oxide, lithium/manganese oxide, lithium/cobalt oxide and lithium/iron phosphate, and possibly also further additives, preferably carbon black.

7. Method for producing an electrode film (1) according to one of Claims 1 to 6, comprising the following steps:
➢ sheathing carrier elements (3) of a carrier medium (2) by applying a first functional material (4), which performs a first function, to the carrier elements (3) and
➢ filling the remaining volume, formed by the interconnected partial volumes (5), of the carrier overall volume with at least one second functional material (6), which performs a second function different from the first function.

8. Method according to Claim 7, **characterized in that** the carrier elements (3) are sheathed by metallizing the carrier elements (3).

9. Method according to one of Claims 7 and 8, **characterized in that** the carrier medium (2) is a woven strip.

10. Method according to Claim 9, **characterized in that** the carrier medium (2) is a woven glass-fibre strip or a woven carbon-fibre strip or a woven mineral-wool-fibre strip or a woven wire strip.

11. Method according to one of Claims 8 to 10, **characterized in that** the carrier elements (3) are metallized by physical vapour deposition of metal in a vacuum coating unit or by thermal spraying or by hot-dipping the carrier medium (2) into a bath of molten metal.

12. Method according to one of Claims 8 to 10, **characterized in that** the carrier elements (3) are metallized by chemical metal coating in a two-stage method, wherein the metallization of the carrier elements (3) comprises the following steps:
▪ an activation process and
▪ a metal coating process
or in a three-stage method, wherein the metallization of the carrier elements (3) comprises the following steps:
▪ an activation process,
▪ a metal coating process and
▪ a metal-layer reinforcement process.

## Revendications

1. Feuille d'électrode (1) pour une application dans des accumulateurs d'énergie électrique, dans laquelle est disposé un milieu de support (2) de type feuille, constitué d'au moins un matériau de construction et comprenant un volume total de support, avec une extension transversale (7) ≤ 100 µm, lequel milieu de support doit être considéré comme une matrice et est constitué d'éléments de support réalisés de manière linéaire (3a), lesquels présentent une dimension importante, la grande dimension, et sont de petite taille dans les deux autres dimensions, les deux dimensions plus petites, le rapport de la grande dimension aux deux dimensions plus petites étant d'au moins 50 : 1 et le rapport des deux dimensions plus petites l'une par rapport à l'autre n'étant pas inférieur à 1 : 5 ni supérieur à 5 : 1, et d'éléments de support réalisés de manière nodulaire (3b), lesquels constituent les composants de matériau du milieu de support (2) et traversent le volume total de support, pour former une extension en forme de bande dans laquelle se trouvent des volumes partiels (5) du volume total de support reliés entre eux, lesquels volumes partiels sont délimités par des éléments de support (3) voisins, les éléments de support linéaires (3a) présentant au moins par sections de grands espacements entre eux, lesquels, par rapport à la plus grande des deux dimensions plus petites des éléments de support linéaires (3a), sont supérieurs à 5 : 1, les éléments de support réalisés de manière linéaire (3a) et les éléments de support réalisés de manière nodulaire (3b) étant revêtus de manière enveloppante d'un premier matériau fonctionnel (4) qui remplit une première fonction, et le volume restant du volume total de support, formé par les volumes partiels (5) reliés entre eux, étant rempli totalement mais non de manière compacte par au moins un deuxième matériau fonctionnel (6) qui remplit une deuxième fonction différente de la première fonction.

2. Feuille d'électrode (1) selon la revendication 1, **caractérisée en ce qu'**au moins un deuxième matériau fonctionnel (6) recouvre la face supérieure et/ou la face inférieure du milieu de support (2).

3. Feuille d'électrode (1) selon l'une quelconque des revendications 1 ou 2, **caractérisée en ce que** les éléments de support réalisés de manière linéaire (3a) du milieu de support (2) sont des fils de chaîne et de trame entrelacés, s'étendant perpendiculairement les uns aux autres et formant un tissu.

4. Feuille d'électrode (1) selon l'une quelconque des revendications 1 à 3, **caractérisé en ce que** le premier matériau fonctionnel (4) est un métal.

5. Feuille d'électrode (1) selon l'une quelconque des revendications 1 à 4, **caractérisée en ce que** le milieu de support (2) est un ruban de tissu de fibres de verre ou un ruban de tissu de fibres de carbone ou un ruban de tissu de fibres de laine minérale ou un ruban de tissu de fibres polymères ou un ruban de fils métalliques.

6. Feuille d'électrode (1) selon l'une quelconque des revendications 1 à 5, **caractérisée en ce qu'**au moins un deuxième matériau fonctionnel (6) contient l'un des mélanges de substances issus du groupe comprenant l'oxyde de lithium/nickel, l'oxyde de lithium/manganèse, l'oxyde de lithium/cobalt et le phosphate de lithium/fer, ainsi qu'éventuellement d'autres additifs, de préférence du noir de carbone.

7. Procédé de fabrication d'un feuille d'électrode (1) selon l'une quelconque des revendications 1 à 6, comprenant les étapes suivantes :
➢ enveloppement d'éléments de support (3) d'un milieu de support (2) par application, sur les éléments de support (3), d'un premier matériau fonctionnel (4) qui remplit une première fonction, et
➢ remplissage du volume restant du volume total de support, formé par les volumes partiels (5) reliés entre eux, par au moins un deuxième matériau fonctionnel (6) qui remplit une deuxième fonction différente de la première fonction.

8. Procédé selon la revendication 7, **caractérisé en ce que** l'enveloppement des éléments de support (3) s'effectue par une métallisation des éléments de support (3).

9. Procédé selon l'une quelconque des revendications 7 ou 8, **caractérisé en ce que** le milieu de support (2) est un ruban de tissu.

10. Procédé selon la revendication 9, **caractérisé en ce que** le milieu de support (2) est un ruban de tissu de fibres de verre ou un ruban de tissu de fibres de carbone ou un ruban de tissu de fibres de laine minérale ou un ruban de fils métalliques.

11. Procédé selon l'une quelconque des revendications 8 à 10, **caractérisé en ce que** la métallisation des éléments de support (3) s'effectue par dépôt physique en phase vapeur de métal dans une installation de revêtement sous vide, ou par pulvérisation thermique, ou par immersion à l'état fondu du milieu de support (2) dans un bain de métal fondu.

12. Procédé selon l'une quelconque des revendications 8 à 10, **caractérisé en ce que** la métallisation des éléments de support (3) s'effectue par revêtement métallique chimique selon un procédé en deux étapes, la métallisation des éléments de support (3) comprenant les étapes suivantes :
▪ un processus d'ensemencement et
▪ un processus de revêtement métallique
ou selon un procédé en trois étapes, la métallisation des éléments de support (3) comprenant les étapes suivantes :
**▪** un processus d'ensemencement,
**▪** un processus de revêtement métallique et
**▪** un processus de renforcement de couche métallique.
